# EUROPÄISCHE PATENTSCHRIFT

(11) **EP 2 997 057 B1**
(45) Veröffentlichungstag und Bekanntmachung des Hinweises auf die Patenterteilung: **01.01.2020**
(21) Anmeldenummer: 14721318.5
(22) Anmeldetag: 29.04.2014
(51) Int. Cl.: C08F 220/28, C08K 3/26, C08L 33/02

(54) **SUPERABSORBIERENDE POLYMERE MIT SCHNELLEN ABSORPTIONSEIGENSCHAFTEN SOWIE VERFAHREN ZU DESSEN HERSTELLUNG**
SUPERABSORBANT POLYMERS WITH QUICK ABSORPTION PROFILE AND PROCESS FOR ITS PREPARATION
POLYMÈRES SUPERABSORBANTS AUX PROPRIÉTÉS D'ABSORPTION RAPIDE AINSI QUE LEUR PROCÉDÉ DE PRODUCTION

(30) Priorität: 15.05.2013 DE 102013208942
(43) Veröffentlichungstag der Anmeldung: 23.03.2016
(73) Patentinhaber: Evonik Operations GmbH, 45128 Essen (DE)
(72) Erfinder: WATTEBLED, Laurent, 40589 Düsseldorf (DE); MIASNIKOVA, Anna, 47798 Krefeld (DE); HENN, Markus, 45894 Gelsenkirchen (DE)
(74) Vertreter: Evonik Patent Association
(86) Internationale Anmeldenummer: PCT/EP2014/058661
(87) Internationale Veröffentlichungsnummer: WO 2014/183987

(56) Entgegenhaltungen:
- EP-A2- 0 545 126
- WO-A1-2013/072268
- US-A- 5 314 420
- US-A1- 2005 137 546

## Beschreibung

Die vorliegende Erfindung betrifft superabsorbierende Polymere mit schnellen Absorptionseigenschaften sowie Verfahren zu deren Herstellung.

Der aktuelle Trend im Windelaufbau geht dahin, noch dünnere Konstruktionen mit reduziertem Cellulosefaseranteil und erhöhtem Superabsorberanteil herzustellen. Der Vorteil dünnerer Konstruktionen zeigt sich nicht nur in einem verbesserten Tragekomfort, sondern auch in reduzierten Kosten bei Verpackung und Lagerhaltung. Mit dem Trend zu immer dünner werdenden Windelkonstruktionen hat sich das Anforderungsprofil an die Superabsorber deutlich verändert. Von entscheidender Bedeutung ist jetzt die Fähigkeit des Hydrogels zur Flüssigkeitsweiterleitung und -verteilung. Aufgrund der höheren Beladung des Hygieneartikels (Menge an Superabsorber pro Flächeneinheit) darf das Polymer im gequollenen Zustand keine Sperrschicht für nachfolgende Flüssigkeit bilden (Gel-Blocking). Weist das Produkt gute Transporteigenschaften auf, so kann eine optimale Ausnutzung des gesamten Hygieneartikels gewährleistet werden.

Neben der Permeabilität der Superabsorber (SAP) (angegeben in Form der sogenannten *"Saline Flow Conductivity* - SFC") und dem Absorptionsvermögen unter einer Druckbelastung ist insbesondere auch die Absorptionsgeschwindigkeit der Superabsorberpartikel (angegeben in Menge an absorbierter Flüssigkeit pro Gramm Superabsorber pro Sekunde) ein entscheidendes Kriterium, welches Aussagen darüber ermöglicht, ob ein diesen Superabsorber in großer Konzentration enthaltender absorbierender Kern, welcher nur einen geringen Fluffanteil aufweist, in der Lage ist, bei seinem ersten Kontakt mit Flüssigkeiten diese schnell zu absorbieren (sogenannte *"acquisition"*). Diese *"aquisition"* ist bei absorbierenden Kernen mit hohem Superabsorberanteil unter anderem von der Absorptionsgeschwindigkeit des Superabsorbermaterials abhängig.

Aus dem Stand der Technik sind unterschiedliche Schutzrechte bekannt die eine Erhöhung der Absorptionsgeschwindigkeit von Superabsorberpartikel ermöglichen sollen. Aus der WO96/17884A1 ist ein wasserabsorbierendes Harz bekannt in dessen Monomerlösung ein festes Treibmittel mit einem Teilchendurchmesser von 1 bis 100 µm eingesetzt wird. Grundsätzlich werden organische Azoverbindungen bevorzugt und hier im Speziellen Acrylsäuresalze von einer Aminogruppe enthaltende Azoverbindungen. Reine Carbonate, Ammoniumnitrid oder Mischungen hieraus können gegebenenfalls verwendet werden.

Nachteilig ist hierbei der schnelle Umsatz der Azoverbindungen als auch das grundsätzliche Dispergieren der kleinen festen Partikel in der Monomerlösung. Größere Partikel können nicht gut dispergiert werden, ohne dass es zu einer Trennung von Partikeln und Monomerenlösung in der Dispersion vor dem Gelpunkt kommt.

Nachteilig hierbei ist bei der Verwendung von Superabsorbern, die aus dem Stand der Technik bekannt sind, dass Leckage-Probleme auftreten, da der SAP entweder die Flüssigkeit zu langsam aufnimmt und/oder über einen ungeeigneten Flüssigkeitstransport verfügt.

Der aktuelle Trend insbesondere im Windelaufbau geht dahin, noch dünnere absorbierende Kerne mit reduziertem Cellulosefaseranteil und erhöhtem Superabsorberanteil herzustellen. Der Vorteil dünnerer Konstruktionen zeigt sich nicht nur in einem verbesserten Tragekomfort, sondern auch in reduzierten Kosten bei Verpackung und Lagerhaltung. Die neuste Generation von absorbierenden Kernen, die beispielsweise in der WO-A-2008/155722, WO-A-2008/155711, WO-A-2008/155710, WO-A-2008/155702, WO-A-2008/155701, WO-A-2008/155699, EP-A-1 225 857, WO-A-01/15647, WO-A-2011/120504, DE-A-10 2009 049 450, WO-A-2008/117109, WO-A-97/11659, EP-A-0 826 349, WO-A-98/37846, WO-A-95/11653, WO-A-95/11651, WO-A-95/11652, WO-A-95/11654, WO-A-2004/071363 oder WO-A-01/89439 beschrieben wird, ist im wesentlichen Cellulose-frei (weswegen entsprechende Windeln auch als *"fluffless diaper"* bezeichnet werden). Die Immobilisierung der Superabsorberpartikel, die in Cellulose-haltigen absorbierenden Kernen durch die Cellulosefasern erfolgt, kann in dieser neuesten Generation absorbierender Kerne dadurch realisiert werden, dass beispielsweise die Superabsorberpartikel mittels thermoplastischer Fasern auf einer Substratoberfläche immobilisiert werden.

Mit dem Trend zu immer dünner werdenden Windelkonstruktionen und dem Wegfall der temporären Flüssigkeitsspeicherungs- und Weiterleitungsfunktion der Cellulosefasern hat sich das Anforderungsprofil an die Superabsorber deutlich verändert. Von entscheidender Bedeutung ist jetzt die Fähigkeit des Hydrogels, das Auslaufen (Leakage) von Urin direkt bei der Miktion zu verhindern. Dies wird durch die Eigenschaft des Superabsorbers/Hydrogels erreicht, die Flüssigkeit während der Quellung effektiv aufzunehmen und in der Gelschicht zu verteilen, bei gleichzeitiger Minimierung der Menge ungebundenen Urins in der Windel. Vorteilhafte Superabsorber führen aufgrund von guten Transporteigenschaften auch zu einer optimalen Ausnutzung des gesamten Hygieneartikels.

Die US 2005/0137546 A1 befasst sich ebenfalls mit Superabsorbern für dünne Windelkonstruktionen. Hier werden während der Polymerisation gekapselte Sodapartikel als Blähmittel zugegeben. Als Vernetzer wird polyethylene glycol monoallylether acrylate eingesetzt. Im Zuge der Nachvernetzung können die Superabsorber an ihrer Oberfläche mit einem Tensid versehen werden.

US 5837789 offenbart ein Verfahren zur Herstellung von Superabsorbern, bei dem während der Polymerisation Natriumkarbonat eingesetzt wird. Als Vernetzer wird ein Acrylatester eines mit zehn Ethylenoxid ethoxylierten Allylalkohols verwendet.

Auch aus der US 5,154,713 sind wasserabsorbierende Polymere bekannt die mittels eines Carbonat-Treibmittels in der Monomerlösung hergestellt werden. Hierbei erfolgt das Einbringen der Carbonatpartikel in die Monomerenlösung deutlich vor der eigentlichen Polymerisation, und der Initiatorzugabe von 5 bis 15 Minuten nach dem Dispergieren des Carbonat-Treibmittels, wodurch eine gleichmäßige Verteilung dieser Carbonatpartikel nicht mehr gewährleistet ist und ein nicht unerheblicher Teil des Carbonats gegebenenfalls schon wieder ausgetragen ist. Aus der EP 0 644 207 sind superabsorbierende Polymere bekannt die ebenfalls mit einem organischen Carbonattreibmittel in der Monomerlösung versetzt werden. Nachteilig ist hier die Verwendung von Aminverbindungen als auch der Verbleib der Abspaltprodukte der organischen Carbonate im Superabsorber.

In der JP-H11-199602 werden ebenfalls Carbonat-Treibmittel in die Monomerlösung eingebracht. Zudem beschreibt diese Schrift die Polymerisation in Gegenwart eines einpolymerisierbaren Tensids, welches durch eine Carbonyl-Gruppe gekennzeichnet ist.

Die nachveröffentlichte WO 2013/072268 A1 derselben Anmelderin offenbart Verfahren zur Herstellung von Superabsorbern, bei denen die Polymersation in Gegenwart von Natriumcarbonat als Blähmittel und einem polymerisierbaren Tensid erfolgt. Bei den polymerisierbaren Tensiden handelt es sich um nichtionische Polyether mit einer ungesättigten Allyl-Endgruppe sowie mit einer endständigen Acetyl-Funktionalität.

Aus der WO 2010/095427 sind wasserabsorbierende Polymere bekannt, in denen in die Monomerlösung ein Gas dispergiert wird. Hierbei handelt es sich um Stickstoff, Argon, Helium, Kohlendioxid oder ähnliche, wodurch eine porösere Struktur gewährleistet werden soll. Diese Mikrobläschen sollen mittels Polyoxyethylen-(20)-Sorbitanmonostearat solange in der Monomerlösung gehalten werden bis die Polymerisation einsetzt. Nachteilig ist hierbei, dass die Tenside wieder aus dem Endprodukt ausgewaschen werden können und die Perfomance negativ beeinflussen.

Von entscheidender Bedeutung ist jetzt die Fähigkeit des Hydrogels, das Auslaufen (Leakage) von Urin direkt bei der Miktion zu verhindern. Dies wird durch die Eigenschaft des Superabsorbers/Hydrogels erreicht, die Flüssigkeit während der Quellung effektiv aufzunehmen und in der Gelschicht zu verteilen, bei gleichzeitiger Minimierung der Menge ungebundenen Urins in der Windel. Vorteilhafte Superabsorber führen aufgrund von guten Transporteigenschaften auch zu einer optimalen Ausnutzung des gesamten Hygieneartikels.

Unter dem Begriff "Rewet" wird im Allgemeinen die Eigenschaft eines Superabsobers oder eines Verbundes der einen Superabsorber enthält, verstanden, unter Druckbelastung an eine saugfähige Lage Flüssigkeit abzugeben. Unter dem Begriff "saugfähige Lage" werden z. B. Papier, Filterpapier, Collagen, Schwämme. Schäume oder Ähnliche verstanden. Aus der EP1858998B1 sind superabsorbierende Schäume bekannt, bei denen die Monomerlösung nur unter erhöhtem Druck von 12 bar durch Zugabe von Kohlendioxid und Tensiden einen Schaum ergibt.

Die bisher aus dem Stand der Technik bekannten Superabsorber sind jedoch nur unzureichend für einen Einsatz in der vorstehend beschriebenen neuen Generation von Cellulose-freien Windelkonstruktionen geeignet.

Allgemein liegt der vorliegenden Erfindung die Aufgabe zu Grunde, die sich aus dem Stand der Technik ergebenden Nachteile zu überwinden.

Es ist insbesondere die Aufgabe der vorliegenden Erfindung, ein Verfahren zur Herstellung eines wasserabsorbierenden Polymeren zur Verfügung zu stellen, das eine verbesserte Quellgeschwindigkeit und schnellere Aufnahme von Flüssigkeiten aufweist unter gleichzeitiger Beibehaltung der Gesamtqualität und insbesondere einer hohen Permeabilität.

Außerdem ist es eine weitere Aufgabe das Verfahren in ökonomisch einfacher Weise durchzuführen, wobei die Verwendung von organischen Additiven minimiert wird, als auch eine drucklose Arbeitsweise gewährleistet werden soll.

Es ist insbesondere eine Aufgabe der vorliegenden Erfindung, ein Verfahren bereitzustellen, nach dem wasserabsorbierende Polymere hergestellt werden können, wobei eine besonders hohe Quellgeschwindigkeit gewährleistet werden kann.

Eine weitere Aufgabe der vorliegenden Erfindung besteht zusätzlich darin, ein Verfahren bereit zu stellen, nach dem wasserabsorbierende Polymere hergestellt werden können die einen schnellen und aktiven Flüssigkeitstransport, z.B. in dünnen Windeln gewährleisten, so dass eine schnelle Aufnahme und eine gute Verteilung, d. h. eine entsprechende Kapillarität gewährleistet wird.

Eine weitere Aufgabe der Erfindung besteht vornehmlich darin, ein wasserabsorbierendes Polymer, Verbunde, die derartige wasserabsorbierende Polymere enthalten, und chemische Produkte, die derartige wasserabsorbierende Polymere oder Verbunde enthalten, anzugeben, wobei die wasserabsorbierenden Polymeren eine er höhte Absorptionsgeschwindigkeit für wässrige Lösungen aufweisen.

Diese Aufgaben werden gelöst durch den Gegenstand der kategoriebildenden Ansprüche. Vorteilhafte Ausgestaltungen und Weiterbildungen, die einzeln oder in Kombination auftreten können, sind Gegenstand der jeweils abhängigen Ansprüche.

Ein Beitrag zur Lösung der eingangs genannten Aufgabe leistet das Verfahren zur Herstellung eines wasserabsorbierenden Polymers mit den Merkmalen des Anspruch 1.

Unter dem Begriff "wasserabsorbierendes Polymer" wird erfindungsgemäß der Superabsorber verstanden.

Eine weitere Ausführungsform betrifft das Verfahren zur Herstellung eines wasserabsorbierenden Hydrogels mit den Merkmalen des Anspruch 2.

Dieses erfindungsgemäße Hydrogel-Polymer kann mittels einer thermisch induzierten Nachvernetzung in ein erfindungsgemäßes wasserabsorbierendes Polymer (Superabsorber) überführt werden

Erfindungsgemäß ist gewährleistet, dass die Tenside in das Polymernetzwerk einpolymerisiert werden. Vorteilhafterweise wird hierdurch die Menge an extrahierbaren tensidischen Bestandteilen stark erniedrigt und die Oberflächenspannung entsprechend nur minimal reduziert.

Erfindungsgemäß wird durch die Zugabe von Tensiden und Blähmittel zu der Monomeren Lösung nach Polymerisation eine fein-poröse Gel-Struktur erzielt und werden Superabsorber-Pulver erhalten, die eine größere Oberfläche aufweisen. Vorteilhafterweise wird durch die erfindungsgemäße Vergrößerung der gesamten Oberfläche eine schnellere Absorption der Flüssigkeit, im Vergleich zu herkömmlichen SAPs gewährleistet. Dies wird durch den sogenannten FSR-Wert dargestellt. Die erfindungsgemäßen wasserabsorbierenden Polymere haben einen FSR im Bereich von 0,30 bis 0,70 bevorzugt von 0,35 bis 0,60, besonders bevorzugt von 0,40 bis 0,50.

Erfindungsgemäß liegt die Oberflächenspannung trotz des Einsatzes der Tenside im Bereich von über 50 mN/m, bevorzugt über 55 mN/m, besonders bevorzugt über 60 mN/m und am meisten bevorzugt über 65 mN/m. Die Oberflächenspannung ist erfindungsgemäß nicht größer als 71 mN/m.

Erfindungsgemäß liegt die Permeabilität, der als SFC-Wert bezeichnet wird (in der vorliegenden Erfindung immer bezogen auf 1,5g), der wasserabsorbierenden Polymerzusammensetzung im Bereich von 30 bis 200, bevorzugt 50 bis 180 und besonders bevorzugt im Bereich von 70 bis 150.

Die Partikelverteilung PSD des Hydrogel-Polymers ist erfindungsgemäß so ausgebildet, dass mehr als 60 Gew. % der Partikel im Bereich von 300 µm bis 600µm liegen und weniger als 5 Gew.% der Partikel kleiner 150 µm sind.

Bei einer niedrigen Oberflächenspannung, führt dies im Allgemeinen zu erhöhten "Rewet" Werten, z.B. Backsheet Rewet oder zu Leakage für die Windel in denen solche Superabsorber eingesetzt werden. Vorteilhafterweise wird dieses Problem durch das erfindungsgemäße Verfahren und in Form der einpolymerisierbaren Tenside unterbunden. Zusätzlich, zeigen die Superabsorber gute Performance hinsichtlich Retention (CRC) und Absorption gegen Druck (AAP).

Massgeschneiderte Tenside werden für die Herstellung der erfindungsgemäßen Superabsorber zu der Monomeren Lösung zugesetzt. Diese speziellen Tenside enthalten funktionelle Gruppen, die polymerisierbar sind. Es handelt sich erfindungsgemäß um ungesättigte Polyether Copolymere die aus eher hydrophilen Ethylenglykol-Einheiten und eher hydrophoben Alkylenglykol-Einheiten mit 3 bis 6 C-Atomen aufgebaut sind. Die ungesättigten Polyether können in Kombination mit Ethylenglykol-Einheiten eine oder mehrere voneinander verschiedene Alkylenglykol-Einheiten enthalten. Bevorzugt werden, Propylenglykol (z.B. 1,2- oder 1,3-Propandiol), Butylenglykol (z.B. 1,2-, 1,3- oder 1,4-Butandiol), Pentylenglykol (z.B. 1,5-Pentandiol, 1,2-Pentandiol, 1,3-Pentandiol, 1,4-Pentandiol, 2,3-Pentandiol, 2,4-Pentandiol oder 2,5-Pentandiol) oder Hexylenglykol (z.B. 1,6-Hexandiol). Die Alkylenglykol-Einheiten können im Tensid statistisch, blockartig oder als Gradient verteilt sein. Im Rahmen der vorliegenden Erfindung kann es sich bei den einzelnen Alkylenglykol-Einheiten um isotaktische, syndiotaktische oder ataktische Abfolgen der Konfiguration in dem Molekül handeln.

Der Polymerisationsgrad der Polyether Struktur des Tensids liegt im Allgemeinen im Bereich von 2 bis 100, vorzugsweise im Bereich von 4 bis 50, besonders bevorzugt im Bereich von 6 bis 20. Die angegebenen Alkoxylierungsgrade beziehen sich dabei jeweils auf den mittleren Alkoxylierungsgrad. Selbstverständlich liegen herstellungsbedingt in der Regel Gemische vor, in denen zusätzlich niedere und höhere Oligomere enthalten sein können.

Die ungesättigte Gruppe ist eine (Meth)allyl Ether-Gruppe und steht am Kettenende.

Besonders bevorzugt sind statistische oder Gradienten-Strukturen wie z.B. hydroxyfunktionellen Tensiden wie Blemmer®50PEP-300 (Polyalkylenglykolmonomethacrylat; 3,5 Ethylenglykoleinheiten und 2,5 Propylenglykoleinheiten), Blemmer®55PET-800 (Polyalkylenglykolmonomethacrylat; 10 Ethylenoglykoleinheiten und 5 Butylenglykoleinheiten),

In einer weiteren bevorzugten Ausführungsform werden Block-Strukturen wie z. B. Blemmer®70PEP-350B (Polyalkylenglykolmonomethacrylat; 5 Ethylenglykoleinheiten und 2 terminale Propylenglykoleinheiten), alle der NOF Corporation (Japan) eingesetzt.
Des Weiteren seien beispielhaft für die Block-Copolymere polymerisierbaren Tenside mit einem Alkylether Rest, wie folgt aufgezählt: Methoxy-Polyalkylenglykolmono(meth)acrylat (6 Ethylenglykoleinheiten und 6 terminale Propylenglykoleinheiten; sowohl als 7,5 Ethylenglykoleinheiten und 3 terminale Propylenglykoleinheiten) und Butoxy-Polyalkylenglykolmono(meth)acrylat (4 Propylenglykoleinheiten und 7 terminale Ethylenglykoleinheiten) der Evonik Industries AG.
In einer weiteren Ausführungsform können die allylischen Tenside auch in einer statistischen Struktur vorliegen wie z.B. (Polyalkylenglykolmonoallylether; 7 Ethylenglykoleinheiten und 3 Propylenglykoleinheiten) (PE8482 Evonik Indusries AG).

Als Blähmittel werden erfindungsgemäß Carbonate aus der Gruppe von Lithium-, Natrium-, Kalium-, Rubidium-, Cäsiumcarbonat, oder höherwertige Metallionen wie Beryllium-, Calcium-, Magnesium-, Strontiumcarbonat oder Mischungen dieser verwendet. Als weitere Verbindungen können auch granulierte Carbonate eingesetzt werden, die auch als Mischsalze aus einem Carbonat und/oder Percarbonat mit einem weiteren als Deckschicht fungierenden Salz wie z. B. einer Sulfatverbindung hergestellt werden. Erfindungsgemäß weisen die Blähmittel eine Partikelgröße von 10 µm bis 900 µm, bevorzugt 50 µm bis 500 µm und besonders bevorzugt von 100 µm bis 450 µm auf. Die Carbonatverbindungen werden als Pulver eingesetzt.

Erfindungsgemäß werden die Tenside im Allgemeinen zeitgleich mit dem Vernetzer eingesetzt. Das Blähmittel wird in einer Ausführungsform nach der Zugabe des Tensides zugegeben. In weiteren Ausführungsformen kann das Blähmittel zeitgleich oder vor dem Tensid zugeführt werden.

Bei der Zugabe von Blähmitteln bzw. Soda entstehen Bläschen, die in Anwesenheit von Tensiden einen kleineren Durchmesser aufweisen

Erfindungsgemäß stabilisieren die Tenside die große Gasoberfläche, die in der Lösung durch das Blähmittel entsteht. Durch die parallel ablaufende Polymerisation wird eine fein porige Struktur fixiert (poröses Gel). Die Tenside werden während der Polymerisation "inaktiviert" d.h. sie können (sich) im Polymer Netzwerk einbauen bzw. werden aufgrund ihrer reaktiven Funktionalität eingebaut.

Die beobachtete Synergie zwischen Tensiden und Blähmitteln erlaubt vorteilhafterweise den Einsatz von geringeren Mengen an Blähmittel wie z.B. Carbonat. Typische Nachteile, die mit Carbonaten verbunden werden, sind u.a. die möglichen Schwierigkeiten bei der Mischung und Zugabe in der Lösung, sowie eine unkontrollierte Dispersion der entstehenden Bläschen wie z.B. eine starke Koaleszenz oder zu große Blasen oder der Verlust an anderen Eigenschaften des SAPs.

Die monoethylenisch ungesättigten, säuregruppenhaltigen Monomere (α1) können teilweise oder vollständig, bevorzugt teilweise neutralisiert sein. Vorzugsweise sind die monoethylenisch ungesättigten, säuregruppenhaltigen Monomere zu mindestens 10 Mol-%, besonders bevorzugt zu 25 bis 90 Mol-% und darüber hinaus bevorzugt zu 50-80 Mol-% neutralisiert. Die Neutralisation der Monomere (α1) kann vor, aber auch nach der Polymerisation erfolgen. Hierbei erfolgt die Teilneutralisierung zu mindestens 10 Mol-%, besonders bevorzugt zu 25 bis 90 Mol-% und darüber hinaus bevorzugt zu 50-80 Mol-% neutralisiert. Ferner kann die Neutralisation mit Alkalimetallhydroxiden, Erdalkalimetallhydroxiden, Ammoniak sowie Carbonaten und Bicarbonaten erfolgen. Daneben ist jede weitere Base denkbar, die mit der Säure ein wasserlösliches Salz bildet.

Auch eine Mischneutralisation mit verschiedenen Basen ist denkbar. Bevorzugt ist die Neutralisation mit Ammoniak oder mit Alkalimetallhydroxiden, besonders bevorzugt mit Natriumhydroxid oder mit Ammoniak.

Ferner können bei einem Polymer die freien Säuregruppen überwiegen, so dass dieses Polymer einen im sauren Bereich liegenden pH-Wert aufweist. Dieses saure wasserabsorbierende Polymer kann durch ein Polymer mit freien basischen Gruppen, vorzugsweise Amingruppen, das im Vergleich zu dem sauren Polymer basisch ist, mindestens teilweise neutralisiert werden. Diese Polymere werden in der Literatur als *"Mixed-Bed Ion-Exchange Absorbent Polymers"* (MBIEA-Polymere) bezeichnet und sind unter anderem in der WO 99/34843 offenbart. Die Offenbarung der WO 99/34843 wird hiermit als Referenz eingeführt und gilt somit als Teil der Offenbarung. In der Regel stellen MBIEA-Polymere eine Zusammensetzung dar, die zum einen basische Polymere, die in der Lage sind, Anionen auszutauschen, und andererseits ein im Vergleich zu dem basischen Polymer saures Polymer, das in der Lage ist, Kationen auszutauschen, beinhalten. Das basische Polymer weist basische Gruppen auf und wird typischerweise durch die Polymerisation von Monomeren erhalten, die basische Gruppen oder Gruppen tragen, die in basische Gruppen umgewandelt werden können. Bei diesen Monomeren handelt es sich vor allen Dingen um solche, die primäre, sekundäre oder tertiäre Amine oder die entsprechenden Phosphine oder mindestens zwei der vorstehenden funktionellen Gruppen aufweisen. Zu dieser Gruppe von Monomeren gehören insbesondere Ethylenamin, Allylamin, Diallylamin, 4-Aminobuten, Alkyloxycycline, Vinylformamid, 5-Aminopenten, Carbodiimid, Formaldacin, Melamin und dergleichen, sowie deren sekundäre oder tertiäre Aminderivate.

Bevorzugte monoethylenisch ungesättigte, säuregruppenhaltige Monomere (α1) sind Acrylsäure, Methacrylsäure, Ethacrylsäure, α-Chloracrylsäure, α-Cyanoacrylsäure, β-Methylacrylsäure (Crotonsäure), α-Phenylacrylsäure, β-Acryloxypropionsäure, Sorbinsäure, α-Chlorsorbinsäure, 2'-Methylisocrotonsäure, Zimtsäure, p-Chlorzimtsäure, β-Stearylacrylsäure, Itaconsäure, Citraconsäure, Mesaconsäure, Glutaconsäure, Aconitsäure, Maleinsäure, Fumarsäure, Tricarboxyethylen und Maleinsäureanhydrid, wobei Acrylsäure sowie Methacrylsäure besonders und Acrylsäure darüber hinaus bevorzugt sind.

Neben diesen carboxylatgruppenhaltigen Monomeren sind als monoethylenisch ungesättigte, säuregruppenhaltige Monomere (α1) des Weiteren ethylenisch ungesättigte Sulfonsäuremonomere oder ethylenisch ungesättigte Phosphonsäuremonomere bevorzugt.

Als ethylenisch ungesättigte Sulfonsäuremonomere sind Allylsulfonsäure oder aliphatische oder aromatische Vinylsulfonsäuren oder acrylische oder methacrylische Sulfonsäuren bevorzugt. Als aliphatische oder aromatische Vinylsulfonsäuren sind Vinylsulfonsäure, 4-Vinylbenzylsulfonsäure, Vinyltoluolsulfonsäure und Stryrolsulfonsäure bevorzugt. Als Acryl- bzw. Methacrylsulfonsäuren sind Sulfoethyl(meth)acrylat, Sulfopropyl(meth)acrylat, 2-Hydroxy-3-methacryloxypropylsulfonsäure sowie (Meth)Acrylamidoalkylsulfonsäuren wie 2-Acrylamido-2-methylpropansulfonsäure bevorzugt.

Als ethylenisch ungesättigte Phosphonsäuremonomere sind Vinylphosphonsäure, Allylphosphonsäure, Vinylbenzylphosponsäure, (Meth)acrylamidoalkylphosphonsäuren, Acrylamidoalkyldiphosphonsäuren, phosponomethylierte Vinylamine und (Meth)acryl-phosphonsäurederivate bevorzugt.

Als ethylenisch ungesättigte, einen protonierten Stickstoff enthaltende Monomere (α1) sind vorzugsweise Dialkylaminoalkyl(meth)acrylate in protonierter Form, beispielsweise Dimethylaminoethyl(meth)acrylat-Hydrochlorid oder Dimethylaminoethyl(meth)acrylat-Hydrosulfat, sowie Dialkylaminoalkyl-(meth)acrylamide in protonierter Form, beispielsweise Dimethylaminoethyl(meth)acrylamid-Hydrochlorid, Diemethylaminopropyl(meth)acrylamid-Hydrochlorid, Diemethylaminopropyl(meth)acrylamid-Hydrosulfat oder Dimethylaminoethyl-(meth)acrylamid-Hydrosulfat bevorzugt.

Als ethylenisch ungesättigte, einen quarternierten Stickstoff enthaltende Monomere (α1) sind Dialkylammoniumalkyl(meth)acrylate in quarternisierter Form, beispielsweise Trimethylammoniumethyl(meth)acrylat-Methosulfat oder Dimethylethylammoniumethyl(meth)acrylat-Ethosulfat sowie (Meth)acrylamido-alkyldialkylamine in quarternisierter Form, beispielsweise (Meth)acrylamidopro- pyltrimethylammoniumchlorid, Trimethylammoniumethyl(meth)acrylat-Chlorid oder (Meth)acrylamidopropyltrimethylammoniumsulfat bevorzugt.

Als monoethylenisch ungesättigte, mit (α1) copolymerisierbare Monomere (α2) sind Acrylamide und Methacrylamide bevorzugt.

Bevorzugte (Meth)acrylamide sind neben Acrylamid und Methacrylamid alkylsubstituierte (Meth)acrylamide oder aminoalkylsubstituierte Derivate des (Meth)acrylamids, wie N-Methylol(meth)acrylamid, N,N-Dimethylamino(meth)- acrylamid, Dimethyl(meth)acrylamid oder Diethyl(meth)acrylamid Mögliche Vinylamide sind beispielsweise N-Vinylamide, N-Vinylformamide, N-Vinylacetamide, N-Vinyl-N-Methylacetamide, N-Vinyl-N-methylformamide, Vinylpyrrolidon. Unter diesen Monomeren besonders bevorzugt ist Acrylamid.

Des Weiteren sind als monoethylenisch ungesättigte, mit (α1) copolymerisierbaren Monomere (α2) in Wasser dispergierbare Monomere bevorzugt. Als in Wasser dispergierbare Monomere sind Acrylsäurester und Methacrylsäurester, wie Methyl(meth)acrylat, Ethyl(meth)acrylat, Propyl(meth)acrylat oder Butyl(meth)acrylat, sowie Vinylacetat, Styrol und Isobutylen bevorzugt.

Erfindungsgemäß bevorzugte Vernetzer (α3) sind Verbindungen, die mindestens zwei ethylenisch ungesättigte Gruppen innerhalb eines Moleküls aufweisen (Vernetzerklasse I), Verbindungen, die mindestens zwei funktionelle Gruppen aufweisen, die mit funktionellen Gruppen der Monomeren (α1) oder (α2) in einer Kondensationsreaktion (=Kondensationsvernetzer), in einer Additionsreaktion oder in einer Ringöffnungsreaktion reagieren können (Vernetzerklasse II), Verbindungen, die mindestens eine ethylenisch ungesättigte Gruppe und mindestens eine funktionelle Gruppe, die mit funktionellen Gruppen der Monomeren (α1) oder (α2) in einer Kondensationsreaktion, in einer Additionsreaktion oder in einer Ringöffnungsreaktion reagieren kann (Vernetzerklasse III), aufweisen, oder polyvalente Metallkationen (Vernetzerklasse IV). Dabei wird durch die Verbindungen der Vernetzerklasse I eine Vernetzung der Polymere durch die radikalische Polymerisation der ethylenisch ungesättigten Gruppen des Vernetzermoleküls mit den monoethylenisch ungesättigten Monomeren (α1) oder (α2) erreicht, während bei den Verbindungen der Vernetzerklasse II und den polyvalenten Metallkationen der Vernetzerklasse IV eine Vernetzung der Polymere durch Kondensationsreaktion der funktionellen Gruppen (Vernetzerklasse II) bzw. durch elektrostatische Wechselwirkung des polyvalenten Metallkations (Vernetzerklasse IV) mit den funktionellen Gruppen der Monomere (α1) oder (α2) erreicht wird. Bei den Verbindungen der Vernetzerklasse III erfolgt dementsprechend eine Vernetzung des Polymers sowohl durch radikalische Polymerisation der ethylenisch ungesättigten Gruppe als auch durch Kondensationsreaktion zwischen der funktionellen Gruppe des Vernetzers und den funktionellen Gruppen der Monomeren (α1) oder (α2).

Bevorzugte Verbindungen der Vernetzerklasse I sind Poly(meth)acrylsäureester, die beispielsweise durch die Umsetzung eines Polyols, wie beispielsweise Ethylenglykol, Propylenglykol, Trimethylolpropan, 1,6-Hexandiol, Glycerin, Pentaerythrit, Polyethylenglykol oder Polypropylenglykol, eines Aminoalkohols, eines Polyalkylenpolyaminens, wie beispielsweise Diethylentriamin oder Triethylentetraamin, oder eines alkoxylierten Polyols mit Acrylsäure oder Methacrylsäure gewonnen werden. Als Verbindungen der Vernetzerklasse I sind des Weiteren Polyvinylverbindungen, Poly(meth)allyverbindungen, (Meth)acrylsäureester einer Monovinylverbindung oder (Meth)acrylsäureester einer Mono(meth)allyl- verbindung, vorzugsweise der Mono(meth)allylverbindungen eines Polyols oder eines Aminoalkohols, bevorzugt. In diesem Zusammenhang wird auf DE 195 43 366 und DE 195 43 368 verwiesen. Die Offenbarungen werden hiermit als Referenz eingeführt und gelten somit als Teil der Offenbarung.

Als Verbindungen der Vernetzerklasse I seien als Beispiel genannt Alkenyldi(meth)acrylate, beispielsweise Ethylenglykoldi(meth)acrylat, 1,3-Propylenglykoldi(meth)acrylat, 1,4-Butylenglykoldi(meth)acrylat, 1,3-Butylenglykoldi(meth)acrylat, 1,6-Hexandioldi(meth)acrylat, 1,10-Decandioldi(meth)acrylat, 1,12-Dodecandioldi(meth)acrylat, 1,18-Octadecandioldi(meth)acrylat, Cyclopentandioldi(meth)acrylat, Neopentylglykoldi(meth)acrylat, Methylendi(meth)acrylat oder Pentaerythritdi(meth)acrylat, Alkenyldi(meth)acrylamide, beispielsweise N-Methyldi(meth)acrylamid, N,N'-3-Methylbutylidenbis(meth)acrylamid, N,N'-(1,2-Di-hydroxy-ethylen)bis(meth)acrylamid, N,N'-Hexamethylenbis(meth)acrylamid oder N,N'-Methylenbis(meth)acrylamid, Polyalkoxydi(meth)acrylate, beispielsweise Diethylenglykoldi-(meth)acrylat, Triethylenglykoldi(meth)acrylat, Tetraethylenglykoldi(meth)acrylat, Dipropylenglykoldi(meth)acrylat, Tripropylenglykoldi(meth)acrylat oder Tetrapropylenglykoldi-(meth)acrylat, Bisphenol-A-di(meth)acrylat, ethoxyliertes Bisphenol-A-di(meth)acrylat, Benzylidindi(meth)acrylat, 1,3-Di(meth)acryloyloxy-propanol-2, Hydrochinondi(meth)acry- lat, Di(meth)acrylatester des vorzugsweise mit 1 bis 30 Mol Alkylenoxid pro Hydroxylgruppe oxyalkylierten, vorzugsweise ethoxylierten Trimethylolpropans, Thioethylenglykoldi(meth) acrylat, Thiopropylenglykoldi(meth)acrylat, Thiopolyethylenglykoldi(meth)acrylat, Thiopolypropylenglykoldi(meth)acrylat, Divinylether, beispielsweise 1,4-Butandioldivinylether, Divinylester, beispielsweise Divinyladipat, Alkadiene, beispielsweise Butadien oder 1,6-Hexadien, Divinylbenzol, Di(meth)allylverbindungen, beispielsweise Di(meth)allylphthalat oder Di(meth)allylsuccinat, Homo- und Copolymere von Di(meth)allyldimethylammonium-chlorid und Homo- und Copolymere von Diethyl(meth)allyl- aminomethyl(meth)acrylat-ammoniumchlorid, Vinyl-(meth)acryl-Verbindungen, beispielsweise Vinyl(meth)acrylat, (Meth)allyl-(meth)acryl-Verbindungen, beispielsweise (Meth)allyl(meth)acrylat, mit 1 bis 30 Mol Ethylenoxid pro Hydroxylgruppe ethoxyliertes (Meth)allyl(meth)acrylat, Di(meth)allylester von Polycarbonsäuren, beispielsweise Di(meth)allylmaleat, Di(meth)allyfumarat, Di(meth)allylsuccinat oder Di(meth)allylterephthalat, Verbindungen mit 3 oder mehr ethylenisch ungesättigten, radikalisch polymerisierbaren Gruppen wie beispielsweise Glycerintri(meth)acrylat, (Meth)acrylatester des mit vorzugsweise 1 bis 30 Mol Ethylenoxid pro Hydroxylgruppe oxyethylierten Glycerins, Trimethylolpropantri(meth)acrylat, Tri(meth)acrylatester des vorzugsweise mit 1 bis 30 Mol Alkylenoxid pro Hydroxylgruppe oxyalkylierten, vorzugsweise ethoxylierten Trimethylolpropans, Trimethacrylamid, (Meth)allylidendi(meth)acrylat, 3-Allyloxy-1,2-propandioldi(meth)acrylat, Tri- (meth)allylcyan-urat, Tri(meth)allylisocyanurat, Pentaerythrittetra(meth)acrylat, Pentaerythrittri(meth)acrylat, (Meth)acrylsäureester des mit vorzugsweise 1 bis 30 Mol Ethylenoxid pro Hydroxylgruppe oxyethylierten Pentaerythrits, Tris(2-hydroxyethyl)isocyanurattri(meth)acrylat, Trivinyltrimellitat, Tri(meth)allylamin, Di(meth)allylalkylamine, beispielsweise Di(meth)allylmethylamin, Tri-(meth)allylphosphat, Tetra(meth)allylethylendiamin, Poly(meth)allylester, Tetra(meth)allyloxiethan oder Tetra(meth)allylammoniumhalide.

Als Verbindung der Vernetzerklasse II sind Verbindungen bevorzugt, die mindestens zwei funktionelle Gruppen aufweisen, die in einer Kondensationsreaktion (=Kondensaionsvernetzer), in einer Additionsreaktion oder in einer Ringöffnungsreaktion mit den funktionellen Gruppen der Monomere (α1) oder (α2), bevorzugt mit Säuregruppen, der Monomeren (α1), reagieren können. Bei diesen funktionellen Gruppen der Verbindungen der Vernetzerklasse II handelt es sich vorzugsweise um Alkohol-, Amin-, Aldehyd-, Glycidyl-, Isocyanat-, Carbonat- oder Epichlorfunktionen.

Als Verbindung der Vernetzerklasse II seien als Beispiele genannt Polyole, beispielsweise Ethylenglykol, Polethylenglykole wie Diethylenglykol, Triethylenglykol und Tetraethylenglykol, Propylenglykol, Polypropylenglykole wie Dipropylenglykol, Tripropylenglykol oder Tetrapropylenglykol, 1,3-Butandiol, 1,4-Butandiol, 1,5-Pentandiol, 2,4-Pentandiol, 1,6-Hexandiol, 2,5-Hexandiol, Glycerin, Polyglycerin, Trimethylolpropan, Polyoxypropylen, Oxyethylen-Oxypropylen-Blockcopolymere, Sorbitanfettsäureester, Polyoxyethylensorbitanfettsäureester, Pentaerythrit, Polyvinylalkohol und Sorbitol, Aminoalkohole, beispielsweise Ethanolamin, Diethanolamin, Triethanolamin oder Propanolamin, Polyaminverbindungen, beispielsweise Ethylendiamin, Diethylentriaamin, Triethylentetraamin, Tetraethylenpentaamin oder Pentaethylenhexaamin, Polyglycidylether-Verbindungen wie Ethylenglykoldiglycidylether, Polyethylenglykoldiglycidylether, Glycerindiglycidylether, Glycerinpolyglycidyether, Pentareritritpolyglycidylether, Propylenglykoldiglycidylether Polypropylenglykoldiglycidylether, Neopentylglykoldiglycidylether, Hexandiolglycidylether, Trimethylolpropanpolyglycidylether, Sorbitolpolyglycidylether, Phtahlsäurediglycidylester, Adipinsäurediglycidylester, 1,4-Phenylen-bis(2-oxazolin), Glycidol, Polyisocyanate, vorzugsweise Diisocyanate wie 2,4-Toluoldiisocyanat und Hexamethylendiisocyanat, Polyaziridin-Verbindungen wie 2,2-Bishydroxymethylbutanol-tris[3-(1 -aziridinyl)propionat], 1,6-Hexamethylendiethylenharnstoff und Diphenylmethan-bis-4,4'-N,N'-diethylenharnstoff, Halogenperoxide beispielsweise Epichlor- und Epibromhydrin und α-Methylepichlorhydrin, Alkylencarbonate wie 1,3-Dioxolan-2-on (Ethylencarbonat), 4-Methyl-1,3-dioxolan-2-on (Propylencarbonat), 4,5-Dimethyl-1,3-dioxolan-2-on, 4,4-Dimethyl-1,3-dioxolan-2-on, 4-Ethyl-1,3-dioxolan-2-on, 4-Hydroxymethyl-1,3-dioxolan-2-on, 1,3-Dioxan-2-on, 4-Methyl-1,3-dioxan-2-on, 4,6-Dimethyl-1,3-dioxan-2-on, Poly-1,3-dioxolan-2-on, polyquartäre Amine wie Kondensationsprodukte von Dimethylaminen und Epichlorhydrin. Als Verbindungen der Vernetzerklasse II sind des Weiteren Polyoxazoline wie 1,2-Ethylenbisoxazolin, Vernetzer mit Silangruppen wie γ-Glycidoxypropyltrimethoxysilan und γ-Aminopropyltrimethoxysilan, Oxazolidinone wie 2-Oxazolidinon, Bis- und Poly-2-oxazolidinone und Diglykolsilikate bevorzugt.

Als Verbindungen der Klasse III sind hydroxyl- oder aminogruppenhaltige Ester der (Meth)acrylsäure, wie beispielsweise 2-Hydroxyethyl(meth)acrylat und 2-Hydroxypropyl-(meth)acrylat sowie hydroxyl- oder aminogruppenhaltige (Meth)acrylamide oder Mono(meth)allylverbindungen von Diolen bevorzugt.

Die polyvalenten Metallkationen der Vernetzerklasse IV leiten sich vorzugsweise von ein- oder mehrwertigen Kationen ab, die einwertigen insbesondere von Alkalimetallen, wie Kalium, Natrium, Lithium, wobei Lithium bevorzugt wird. Bevorzugte zweiwertige Kationen leiten sich von Zink, Beryllium, Erdalkalimetallen, wie Magnesium, Calcium, Strontium ab, wobei Magnesium bevorzugt wird. Weiter erfindungsgemäß einsetzbare höherwertige Kationen sind Kationen von Aluminium, Eisen, Chrom, Mangan, Titan, Zirkonium und andere Übergangsmetalle sowie Doppelsalze solcher Kationen oder Mischungen der genannten Salze. Bevorzugt werden Aluminiumsalze und Alaune und deren unterschiedliche Hydrate wie z. B. AlCl₃ × 6H₂O, NaAl(SO₄)₂ × 12 H₂O, KAl(SO₄)₂ × 12 H₂O oder Al₂(SO₄)₃×14-18 H₂O eingesetzt. Besonders bevorzugt werden Al₂(SO₄)₃ und seine Hydrate als Vernetzer der Vernetzungsklasse IV verwendet.

Die im erfindungsgemäßen Verfahren eingesetzten Superabsorberteilchen sind vorzugsweise durch Vernetzer der folgenden Vernetzerklassen bzw. durch Vernetzer der folgenden Kombinationen von Vernetzerklassen vernetzt: I, II, III, IV, I II, I III, I IV, I II III, I II IV, I III IV, II III IV, II IV oder III IV. Die vorstehenden Kombinationen von Vernetzerklassen stellen jeweils eine bevorzugte Ausführungsform von Vernetzern eines im erfindungsgemäßen Verfahren eingesetzten Superabsorberteilchens dar.

Weitere bevorzugte Ausführungsformen der im erfindungsgemäßen Verfahren eingesetzten Superabsorberteilchen sind Polymere, die durch einen beliebigen der vorstehend genannten Vernetzer der Vernetzerklasse I vernetzt sind. Unter diesen sind wasserlösliche Vernetzer bevorzugt. In diesem Zusammenhang sind N,N'-Methylenbisacrylamid, Polyethylenglykoldi(meth)acrylate, Triallylmethylammoniumchlorid, Tetraallylammoniumchlorid sowie mit 9 Mol Ethylenoxid pro Mol Acrylsäure hergestelltes Allylnonaethylenglykolacrylat besonders bevorzugt.

Als wasserlösliche Polymere (α4) können in den Superabsorberteilchen wasserlösliche Polymerisate, wie teil- oder vollverseifter Polyvinylalkohol, Polyvinylpyrrolidon, Stärke oder Stärkederivate, Polyglykole oder Polyacrylsäure enthalten, vorzugsweise einpolymerisiert sein. Das Molekulargewicht dieser Polymere ist unkritisch, solange sie wasserlöslich sind. Bevorzugte wasserlösliche Polymere sind Stärke oder Stärkederivate oder Polyvinylalkohol. Die wasserlöslichen Polymere, vorzugsweise synthetische wie Polyvinylalkohol, können auch als Pfropfgrundlage für die zu polymerisierenden Monomeren dienen.

Als Hilfsstoffe (α5) sind in den Polymeren, organische oder anorganische Partikel wie beispielsweise Geruchsbinder, insbesondere Zeolithe oder Cyclodextrine, Hautpflegesubstanzen, oberflächenaktive Mittel oder Antioxidantien enthalten.

Zu den bevorzugten organischen Hilfsstoffen gehören Cyclodextrine oder deren Derivate sowie Polysaccharide. Außerdem sind Cellulose und Cellulosederivate wie CMC, Celluloseether bevorzugt. Als Cyclodextrine oder Cyclodextrinderivate sind dabei diejenigen Verbindungen bevorzugt, die in DE-A-198 25 486 auf der Seite 3, Zeile 51 bis Seite 4, Zeile 61 offenbart sind. Der vorstehend genannte Abschnitt dieser veröffentlichten Patentanmeldung wird hiermit als Referenz eingeführt und gilt als Teil der Offenbarung der vorliegenden Erfindung. Besonders bevorzugte Cyclodextrine sind nicht derivatisierte α-, β-, γ- oder δ -Cyclodextrine.

Als anorganische partikuläre Hilfsstoffe können alle Materialen eingesetzt werden, welche üblicherweise zur Modifizierung der Eigenschaften wasserabsorbierender Polymere eingesetzt werden. Zu den bevorzugten anorganischen Hilfsstoffen gehören Sulfate wie Na₂SO₄, Lactate wie etwa Natriumlactat, Silikate, insbesondere Gerüstsilikate wie Zeolithe oder Silikate, die durch Trocknung wässriger Kieselsäurelösungen oder Kieselsolen erhalten wurden, beispielsweise die kommerziell erhältlichen Produkte wie Fällungskieselsäuren und pyrogene Kieselsäuren, beispielsweise Aerosile mit einer Teilchengröße im Bereich von 5 bis 50 nm, vorzugsweise im Bereich von 8 bis 20 nm wie "Aerosil 200" der Evonik Industries AG, Aluminate, Titandioxide, Zinkoxide, Tonmaterialien und weitere dem Fachmann geläufige Mineralien sowie kohlenstoffhaltige anorganische Materialien.

Bevorzugte Silikate sind alle natürlichen oder synthetischen Silikate, die in Hollemann und Wiberg, Lehrbuch der Anorganischen Chemie, Walter de Gruyter-Verlag, 91.-100. Auflage, 1985 auf den Seiten 750 bis 783, als Silikate offenbart sind. Der vorstehend genannte Abschnitt dieses Lehrbuchs wird hiermit als Referenz eingeführt und gilt als Teil der Offenbarung der vorliegenden Erfindung.

Besonders bevorzugte Silikate sind die Zeolithe. Als Zeolithe können alle dem Fachmann bekannten synthetischen oder natürlichen Zeolithe eingesetzt werden. Bevorzugte natürliche Zeolithe sind Zeolithe aus der Natrolith-Gruppe, der Harmotom-Gruppe, der Mordenit-Gruppe, der Chabazit-Gruppe, der Faujasit-Gruppe (Sodalith-Gruppe) oder der Analcit-Gruppe. Beispiele für natürliche Zeolithe sind Analcim, Leucit, Pollucite, Wairakite, Bellbergite, Bikitaite, Boggsite, Brewsterite, Chabasit, Willhendersonite, Cowlesite, Dachiardite, Edingtonit, Epistilbit, Erionit, Faujasit, Ferrierite, Amicite, Garronite, Gismondine, Gobbinsite, Gmelinit, Gonnardite, Goosecreekit, Harmotom, Phillipsit, Wellsite, Clinoptilolit, Heulandit, Laumontit, Levyne, Mazzite, Merlinoite, Montesommaite, Mordenit, Mesolit, Natrolit, Scolecit, Offretite, Paranatrolite, Paulingite, Perlialite, Barrerite, Stilbit, Stellerit, Thomsonit, Tschernichite oder Yugawaralite. Bevorzugte synthetische Zeolithe sind Zeolith A, Zeolith X, Zeolith Y, Zeolith P oder das Produkt ABSCENTS®.

Als Zeolithe können Zeolithe des so genannten "mittleren" Typs eingesetzt werden, bei denen das SiO₂/AlO₂-Verhältnis kleiner als 10 ist, besonders bevorzugt liegt das SiO₂/AlO₂-Verhältnis dieser Zeolithe in einem Bereich von 2 bis 10. Neben diesen "mittleren" Zeolithen können weiterhin Zeolithe des "hohen" Typs eingesetzt werden, zu denen beispielsweise die bekannten "Molekularsieb"-Zeolithe des Typs ZSM sowie β-Zeolith gehören. Diese "hohen" Zeolithe sind vorzugsweise durch ein SiO₂/AlO₂-Verhältnis von mindestens 35, besonders bevorzugt von einem SiO₂/AlO₂-Verhältnis in einem Bereich von 200 bis 500 gekennzeichnet.

Als Aluminate werden vorzugsweise die in der Natur vorkommenden Spinelle, insbesondere gewöhnlicher Spinell, Zinkspinell, Eisenspinell oder Chromspinell eingesetzt.

Bevorzugtes Titandioxid ist das reine Titandioxid in den Kristallformen Rutil, Anatas und Brookit, sowie eisenhaltige Titandioxide wie beispielsweise Ilmenit, calciumhaltige Titandioxide wie Titanit oder Perowskit.

Bevorzugte Tonmaterialien sind diejenigen, die in Hollemann und Wiberg, Lehrbuch der Anorganischen Chemie, Walter de Gruyter-Verlag, 91.-100. Auflage, 1985 auf den Seiten 783 bis 785, als Tonmaterialien offenbart sind. Besonders Der vorstehend genannte Abschnitt dieses Lehrbuchs wird hiermit als Referenz eingeführt und gilt als Teil der Offenbarung der vorliegenden Erfindung. Besonders bevorzugte Tonmaterialien sind Kaolinit, Illit, Halloysit, Montmorillonit sowie Talk.

Weiterhin sind als anorganische Feinteilchen die Metallsalze der Mono-, Oligo- und Polyphosphorsäuren erfindungsgemäß bevorzugt. Hierunter sind insbesondere die Hydrate bevorzugt, wobei die Mono- bis Deca-Hydrate und Tri-Hydrate besonders bevorzugt sind. Als Metalle kommen insbesondere Alkali- und Erdalkalimetalle in Betracht, wobei die Erdalkalimetalle bevorzugt sind. Hierunter sind Mg und Ca bevorzugt und Mg besonders bevorzugt. Im Zusammenhang mit Phosphaten, Phosphorsäuren und deren Metallverbindungen wird auf Hollemann und Wiberg, Lehrbuch der Anorganischen Chemie, Walter de Gruyter-Verlag, 91.-100. Auflage, 1985, auf den Seiten 651 bis 669 verwiesen. Der vorstehend genannte Abschnitt dieses Lehrbuchs wird hiermit als Referenz eingeführt und gilt als Teil der Offenbarung der vorliegenden Erfindung.

Bevorzugte kohlenstoffhaltige, jedoch nicht organische Hilfsstoffe sind diejenigen reinen Kohlenstoffe, die in Hollemann und Wiberg, Lehrbuch der Anorganischen Chemie, Walter de Gruyter-Verlag, 91.-100. Auflage, 1985 auf den Seiten 705 bis 708 als Graphite genannt sind. Der vorstehend genannte Abschnitt dieses Lehrbuchs wird hiermit als Referenz eingeführt und gilt als Teil der Offenbarung der vorliegenden Erfindung. Besonders bevorzugte Graphite sind künstliche Graphite wie beispielsweise Koks, Pyrographit, Aktivkohle oder Ruß.

Die im erfindungsgemäßen Verfahren erhaltenen wasserabsorbierende Polymere sind vorzugsweise dadurch erhältlich, dass zunächst aus den vorgenannten Monomeren und Vernetzern ein Hydrogel-Polymer (VP) in partikulärer Form hergestellt wird. Die Herstellung dieses Ausgangsmaterials für die wasserabsorbierenden Polymere erfolgt beispielsweise durch Massepolymerisation, die vorzugsweise in Knetreaktoren wie Extrudern erfolgt, Lösungspolymerisation, Spraypolymerisation, inverse Emulsionspolymerisation oder inverse Suspensionspolymerisation. Bevorzugt wird die Lösungspolymerisation in Wasser als Lösemittel durchgeführt. Die Lösungspolymerisation kann kontinuierlich oder diskontinuierlich erfolgen. Aus dem Stand der Technik ist ein breites Spektrum von Variationsmöglichkeiten hinsichtlich Reaktionsverhältnisse wie Temperaturen, Art und Menge der Initiatoren als auch der Reaktionslösung zu entnehmen. Typische Verfahren sind in den folgenden Patentschriften beschrieben: US 4,286,082, DE 27 06 135, US 4,076,663, DE 35 03 458, DE 40 20 780, DE 42 44 548, DE 43 23 001, DE 43 33 056, DE 44 18 818. Die Offenbarungen werden hiermit als Referenz eingeführt und gelten somit als Teil der Offenbarung.

Als Initiatoren zur Initiierung der Polymerisation können alle unter den Polymerisationsbedingungen Radikale bildende Initiatoren verwendet werden, die üblicherweise bei der Herstellung von Superabsorbern eingesetzt werden. Hierzu gehören thermische Initiatoren, Redoxinitiatoren und Photoinitiatoren, deren Aktivierung durch energiereiche Strahlung erfolgt. Die Polymerisationsinitiatoren können dabei in einer Lösung erfindungsgemäßer Monomere gelöst oder dispergiert enthalten sein. Bevorzugt ist der Einsatz wasserlöslicher Initiatoren.

Als thermische Initiatoren kommen sämtliche dem Fachmann bekannte, unter Temperatureinwirkung in Radikale zerfallende Verbindungen in Betracht. Besonders bevorzugt sind dabei thermische Polymerisationsinitiatoren mit einer Halbwertszeit von weniger als 10 Sekunden, darüber hinaus bevorzugt von weniger als 5 Sekunden bei weniger als 180 °C, darüber hinaus bevorzugt bei weniger als 140°C. Dabei sind Peroxide, Hydroperoxide, Wasserstoffperoxid, Persulfate sowie Azoverbindungen besonders bevorzugte thermische Polymerisationsinitiatoren. In manchen Fällen ist es vorteilhaft, Mischungen verschiedener thermischer Polymerisationsinitiatoren zu verwenden. Unter diesen Mischungen sind die aus Wasserstoffperoxid und Natrium- oder Kaliumperoxodisulfat bevorzugt, die in jedem denkbaren Mengenverhältnis eingesetzt werden können. Geeignete organische Peroxide sind vorzugsweise Acetylacetonperoxid, Methylethylketonperoxid, Benzoylperoxid, Lauroylperoxid, Acetylperoxid, Capyrlperoxid, Isopropylperoxydicarbonat, 2-Ethylhexylperoxydicarbonat, t-Butylhydroperoxid, Cumolhydroperoxid, t-Amylperpivalat, t-Butylperpivalat, t-Butylperneohexonat, t-Butylisobutyrat, t-Butylper-2-ethylhexenoat, t-Butylperisononanoat, t-Butylpermaleat, t-Butylperbenzoat, t-Butyl-3,5,5-tri-methylhexanoat und Amylperneodekanoat. Weiterhin sind als thermische Polymerisationsinitiatoren bevorzugt: Azo-Verbindungen, wie Azobisisobutyronitrol, Azobisdimethylvaleronitril, 2,2'-Azobis-(2-amidinopropan)dihydrochlorid, Azo-bis-amidinopropan-dihydrochlord, 2,2'-Azobis-(N,N-dimethylen)isobutyramidin-dihydrochlorid, 2- (Carbamoylazo)- isobutyronitril und 4,4'-Azobis-(4-cyanovaleriansäure). Die genannten Verbindungen werden in üblichen Mengen eingesetzt, vorzugsweise in einem Bereich von 0,01 bis 5, bevorzugt von 0,1 bis 2 Mol-%, jeweils bezogen auf die Menge der zu polymerisierenden Monomere.

Die Redoxinitiatoren enthalten als oxidische Komponente mindestens eine der oben angegebenen Perverbindungen und als reduzierende Komponente vorzugsweise Ascorbinsäure, Glukose, Sorbose, Manose, Ammonium- oder Alkalimetall-hydrogensulfit, - sulfat, -thiosulfat, -hyposulfit oder -sulfid, Metallsalze, wie Eisen-II-ionen oder Silberionen oder Natriumhydroxymethylsulfoxylat. Vorzugsweise wird als reduzierende Komponente des Redoxinitiators Ascorbinsäure oder Natriumpyrosulfit verwendet. Bezogen auf die bei der Polymerisation eingesetzte Menge an Monomeren wird 1×10⁻⁵ bis 1 Mol-% der reduzierenden Komponente des Redoxinitiators und 1×10⁻⁵ bis 5 Mol-% der oxidierenden Komponente des Redoxinitiators eingesetzt. Anstelle der oxidierenden Komponente des Redoxinitiators, oder in Ergänzung zu diesem, können ein oder mehrere, vorzugsweise wasserlösliche, Azoverbindungen verwendet werden.

Wenn man die Polymerisation durch Einwirkung energiereicher Strahlung auslöst, verwendet man üblicherweise als Initiator sogenannte Photoinitiatoren. Hierbei kann es sich beispielsweise um sogenannte α-Spalter, H-abstrahierende Systeme oder auch um Azide handeln. Beispiele für solche Initiatoren sind Benzophenon-Derivate wie Michlers-Keton, Phenanthren-Derivate, Fluoren-Derivate, Anthrachinon-Derivate, Thioxanton-Derivate, Cumarin-Derivate, Benzoinether und deren Derivate, Azoverbindungen wie die oben genannten Radikalbildner, substituierte Hexaarylbisimidazole oder Acylphosphinoxide. Beispiele für Azide sind: 2-(N,N-Dimethylamino)-ethyl-4-azidocinnamat, 2-(N,N-Dimethylamino)-ethyl-4-azidonaphthylketon, 2-(N,N-Dimethylamino)-ethyl-4-azidobenzoat, 5-Azido-1-naphthyl-2'-(N,N-dimethylamino)ethylsulfon, N-(4-Sulfonylazidophenyl)malein- imid, N-Acetyl-4-sulfonylazidoanilin, 4-Sulfonylazidoanilin, 4-Azidoanilin, 4-Azidophenacylbromid, p-Azidobenzoesäure, 2,6-Bis(p-azidobenzyliden)cyclo-hexanon und 2,6-Bis-(p-azidobenzyliden)-4-methylcyclohexanon. Die Photoinitiatoren werden, falls sie eingesetzt werden, üblicherweise in Mengen von 0,01 bis 5 Gew.-%, bezogen auf die zu polymerisierenden Monomeren angewendet.

Bevorzugt wird erfindungsgemäß ein Initiatorsystem bestehend aus Wasserstoffperoxid, Natriumperoxodisulfat und Ascorbinsäure eingesetzt. In der Regel wird die Polymerisation mit den Initiatoren in einem Temperaturbereich von 0°C bis 90°C initiiert.

Die Polymerisationsreaktion kann durch einen Initiator oder durch mehrere, zusammenwirkende Initiatoren ausgelöst werden. Weiterhin kann die Polymerisation derart durchgeführt werden, dass man zunächst ein oder mehrere Redoxinitiatoren zusetzt. Im weiteren Polymerisationsverlauf werden dann zusätzlich thermische Initiatoren oder Photoinitiatoren appliziert, wobei im Falle von Photoninitiatoren die Polymerisationsreaktion dann durch die Einwirkung energiereicher Strahlung initiiert wird. Auch die umgekehrte Reihenfolge, also die anfängliche Initiierung der Reaktion mittels energiereicher Strahlung und Photoinitiatoren oder thermischen Initiatoren und eine im weiteren Polymerisationsverlauf erfolgende Initiierung der Polymerisation mittels eines oder mehrerer Redoxinitiatoren ist denkbar.

Um die so erhaltenen Hydrogel-Polymere (VP) in eine partikuläre Form zu überführen, können diese nach ihrer Abtrennung aus der Reaktionsmischung zunächst bei einer Temperatur in einem Bereich von 20 bis 300°C, bevorzugt in einem Bereich von 50 bis 250°C und besonders bevorzugt in einem Bereich von 100 bis 200°C bis hin zu einem Wassergehalt von weniger als 40 Gew.-%, bevorzugt von weniger als 20 Gew.-% und darüber hinaus bevorzugt von weniger als 10 Gew.-%, jeweils bezogen auf das Gesamtgewicht des Hydrogel-Polymers (VP), getrocknet werden. Die Trocknung erfolgt vorzugsweise in dem Fachmann bekannten Öfen oder Trocknern, beispielsweise in Bandtrocknern, Hordentrocknern, Drehrohröfen, Wirbelbetttrocknern, Tellertrocknern, Paddeltrocknern oder Infrarottrocknern.

Gemäß der vorliegenden Erfindung erfolgt das Zerkleinern dabei vorzugsweise durch Trockenmahlen, vorzugsweise durch Trockenmahlen in einer Hammermühle, einer Stiftmühle, einer Kugelmühle oder einer Walzenmühle. In einer weiteren Ausführung der vorliegenden Erfindung kann die Zerkleinerung des Hydrogel-Polymeren auch durch die Kombinationen von mehreren der vorbeschriebenen Mühlen erfolgen.

In einer bevorzugten Ausführungsform der erfindungsgemäßen Verfahren werden als wasserabsorbierende Polymere, Partikel erhalten, die einen Innenbereich und einen den Innenbereich begrenzenden Oberflächenbereich aufweisen. Wobei der Oberflächenbereich eine andere chemische Zusammensetzung als der Innenbereich aufweist oder sich in einer physikalischen Eigenschaft vom Innenbereich unterscheidet. Physikalische Eigenschaften, in denen sich der Innenbereich vom Oberflächenbereich unterscheidet, sind beispielsweise die Ladungsdichte oder der Vernetzungsgrad.

Diese einen Innenbereich und einen den Innenbereich begrenzenden Oberflächenbereich aufweisenden wasserabsorbierenden Polymere sind vorzugsweise dadurch erhältlich, dass oberflächennahe, reaktive Gruppen der Partikel des partikulären Hydrogel-Polymers (VP) nachvernetzt werden. Diese Nachvernetzung kann thermisch, photochemisch oder chemisch erfolgen.

Als Nachvernetzer bevorzugt sind die im Zusammenhang mit den Vernetzern (α3) genannten Verbindungen der Vernetzerklasse II und IV.

Unter diesen Verbindungen sind als Nachvernetzer besonders bevorzugt Diethylenglykol, Triethylenglykol, Polyethylenglykol, Glyzerin, Polyglyzerin, Propylenglykol, Diethanolamin, Triethanolamin, Polyoxypropylen, Oxyethylen-Oxypropylen-Blockcopolymere, Sorbitanfettsäureester, Polyoxyethylensorbitanfettsäureester, Trimethylolpropan, Pentaerytrit, Polyvinylalkohol, Sorbitol, 1,3-Dioxolan-2-on (Ethylencarbonat), 4-Methyl-1,3-dioxolan-2-on (Propylencarbonat), 4,5-Dimethyl-1,3-dioxolan-2-on, 4,4-Dimethyl-1,3-dioxolan-2-on, 4-Ethyl-1,3-dioxolan-2-on, 4-Hydroxymethyl-1,3-dioxolan-2-on, 1,3-Dioxan-2-on, 4-Methyl-1,3-dioxan-2-on, 4,6-Dimethyl-1,3-dioxan-2-on, 1,3-Dioxolan-2-on, Poly-1,3-dioxolan-2-on.

Besonders bevorzugt wird Ethylencarbonat als Nachvernetzer eingesetzt. Bevorzugte Ausführungsformen der wasserabsorbierenden Polymere sind diejenigen, die durch Vernetzer der folgenden Vernetzerklassen bzw. durch Vernetzer der folgenden Kombinationen von Vernetzerklassen nachvernetzt sind: II, IV und II IV.

Vorzugsweise wird der Nachvernetzer in einer Menge in einem Bereich von 0,01 bis 30 Gew.-%, besonders bevorzugt in einer Menge in einem Bereich von 0,1 bis 20 Gew.-% und darüber hinaus bevorzugt in einer Menge in einem Bereich von 0,3 bis 5 Gew.-%, jeweils bezogen auf das Gewicht der superabsorbierenden Polymere bei der Nachvernetzung eingesetzt.

Es ist ebenfalls bevorzugt, dass die Nachvernetzung dadurch erfolgt, dass ein Lösemittel, umfassend vorzugsweise Wasser, mit Wasser mischbare organische Lösemittel wie etwa Methanol oder Ethanol oder Mischungen aus mindestens zwei davon, sowie den Nachvernetzer mit dem Aussenbereich der Hydrogel-Polymerteilchen bei einer Temperatur in einem Bereich von 30 bis 300°C, besonders bevorzugt in einem Bereich von 100 bis 200°C in Kontakt gebracht werden. Das in Kontakt bringen erfolgt dabei vorzugsweise durch Aufsprühen, der Mischung bestehend aus Nachvernetzer und Lösemittel, auf die Hydrogel-Polymerteilchen und anschließendes Mischen der mit der Mischung in Kontakt gebrachten Hydrogel-Polymerteilchen. Dabei ist der Nachvernetzer in der Mischung vorzugsweise in einer Menge in einem Bereich von 0,01 bis 20 Gew.-%, besonders bevorzugt in einer Menge in einem Bereich von 0,1 bis 10 Gew.-%, bezogen auf das Gesamtgewicht der Mischung, enthalten. Es ist weiterhin bevorzugt, dass in einer Menge in einem Bereich von 0,01 bis 50 Gew.-%, besonders bevorzugt in einer Menge in einem Bereich von 0,1 bis 30 Gew.-%, jeweils bezogen auf das Gewicht der Hydrogel-Polymerteilchen, mit den Hydrogel-Polymerteilchen in Kontakt gebracht wird.

Als Kondensationsreaktionen kommen vorzugsweise die Bildung von Ester-, Amid-, Imid- oder Urethanbindungen in Betracht, wobei die Bildung von Esterbindung bevorzugt ist. Darüber hinaus können dem erfindungsgemäßen Hydrogel-Polymeren und/oder wasserabsorbierenden Polymeren weitere Additive und Effektstoffe zugesetzt werden.

Als Additive sind des weiteren Trennmittel bevorzugt, wie etwa anorganische oder organische pulverförmige Trennmittel. Diese Trennmittel werden vorzugsweise in Mengen in einem Bereich von 0 bis 2 Gew.-%, besonders bevorzugt in einem Bereich von 0,1 bis 1,5 Gew.-%, bezogen auf das Gewicht des Hydrogel-Polymers und/oder des wasserabsorbierenden Polymers, eingesetzt. Bevorzugte Trennmittel sind Holzmehl, Pulp Fasern, pulverförmige Rinde, Cellulosepulver, mineralische Füllstoffe wie Perlit, synthetische Füllstoffe wie Nylonpulver, Rayonpulver, Diatomerde, Bentonit, Kaolin, Zeolithe, Talk, Lehm, Asche, Kohlenstaub, Magnesiumsilikate, Dünger oder Mischungen der Substanzen. Hochdisperse pyrogene Kieselsäure wie sie unter dem Handelsnamen Aerosil von Evonik Degussa vertrieben wird ist bevorzugt.

In einer weiteren bevorzugten Ausführungsform des erfindungsgemäßen Verfahrens erfolgt das in Kontakt bringen der Hydrogel-Polymerteilchen und oder der wasserabsorbierenden Polymerteilchen mit einen Effektstoff, wie z.B. einem Polyzucker, einer polyphenolischen Verbindung wie z.B. hydrolisierbare Tannine oder einer Silizium-Sauerstoff beinhaltenden Verbindung oder einer Mischung von mindestens zwei darauf basierenden Effektstoffen. Der Effektstoff kann sowohl in fester Form (Pulver) als auch in gelöster form mit einem Lösemittel zugegeben werden, wobei die Zugabe des Effektstoffs frühestens nach dem Verfahrensschritt iii) erfolgt. Als Effektstoff wird im Rahmen der vorliegenden Erfindung ein Stoff verstanden, der zur Geruchsinhibierung dient.

Erfindungsgemäß werden hierunter Polyzucker verstanden unter denen der Fachmann solche aus der Gruppe von den geläufigen Stärken und deren Derivate, Cellulosen und deren Derivate, Cyclodextrine versteht, wobei als Cyclodextrine vorzugsweise α-Cyclodextrin, β-Cyclodextrin, γ-Cyclodextrin oder Mischungen aus diesen Cyclodextrinen verstanden werden.

Als Silizium-Sauerstoff beinhaltende Verbindungen sind Zeolithe bevorzugt. Als Zeolithe können alle dem Fachmann bekannten synthetischen oder natürlichen Zeolithe eingesetzt werden. Bevorzugte natürliche Zeolithe sind Zeolithe aus der Natrolith-Gruppe Harmotom-Gruppe, der Mordenit-Gruppe, der Chabazit-Gruppe, der Faujasit-Gruppe (Sodalith-Gruppe) oder der Analcit-Gruppe. Beispiele für natürliche Zeolithe sind Analcim, Leucit, Pollucite, Wairakite, Bellbergite, Bikitaite, Boggsite, Brewsterite, Chabazit, Willhendersonite, Cowlesite, Dachiardite, Edingtonit, Epistilbit, Erionit, Faujasit, Ferrierite, Amicite, Garronite, Gismondine, Gobbinsite, Gmelinit, Gonnardite, Goosecreekit, Harmotom, Phillipsit, Wellsite, Clinoptilolit, Heulandit, Laumontit, Levyne, Mazzite, Merlinoite, Montesommaite, Mordenit, Mesolit, Natrolit, Scolecit, Offretite, Paranatrolite, Paulingite, Perlialite, Barrerite, Stilbit, Stellerit, Thomsonit, Tschernichite oder Yugawaralite. Bevorzugte synthetische Zeolithe sind Zeolith A, Zeolith X, Zeolith Y, Zeolith P oder das Produkt ABSCENTS®.

Als Kationen enthalten die in dem erfindungsgemäßen Verfahren eingesetzten Zeolithe vorzugsweise Alkalimetall-Kationen wie Li⁺, Na⁺, K⁺, Rb⁺, Cs⁺ oder Fr⁺ und/oder Erdalkalimetall-Kationen wie Mg²⁺, Ca²⁺, Sr²⁺ oder Ba²⁺.

Als Zeolithe können Zeolithe des sogenannten "mittleren" Typs eingesetzt werden, bei denen das SiO₂/AlO₂-Verhältnis kleiner als 10 ist, besonders bevorzugt liegt das SiO₂/AlO₂-Verhältnis dieser Zeolithe in einem Bereich von 2 bis 10. Neben diesen "mittleren" Zeolithen können weiterhin Zeolithe des "hohen" Typs eingesetzt werden, zu denen beispielsweise die bekannten "Molekularsieb"-Zeolithe des Typs ZSM sowie beta-Zeolith gehören. Diese "hohen" Zeolithe sind vorzugsweise durch ein SiO₂/AlO₂-Verhältnis von mindestens 35, besonders bevorzugt von einem SiO₂/AlO₂-Verhältnis in einem Bereich von 200 bis 500 gekennzeichnet.

Vorzugsweise werden die Zeolithe als Partikel mit einer mittleren Partikelgröße in einem Bereich von 1 bis 500 µm, besonders bevorzugt in einem Bereich von 2 bis 200 µm und darüber hinaus bevorzugt in einem Bereich von 5 bis 100 µm eingesetzt.

Die Effektstoffe werden in den erfindungsgemäßen Verfahren vorzugsweise in einer Menge in einem Bereich von 0,1 bis 50 Gew.-%, besonders bevorzugt in einem Bereich von 1 bis 40 Gew.-% und darüber hinaus bevorzugt in einer Menge in einem Bereich von 5 bis 30 Gew.-%, jeweils bezogen auf das Gewicht der Hydrogel-Polymerteilchen und oder wasserabsorbierenden Polymerteilchen, eingesetzt.

Als keimhemmende Mittel sind grundsätzlich alle gegen grampositive Bakterien wirksamen Stoffe bevorzugt, wie z. B. 4-Hydroxybenzoesäure und ihre Salze und Ester, N-(4-Chlorphenyl)-N'-(3,4dichlorphenyl)harnstoff, 2,4,4'-Trichlor-2'-hydroxydiphenylether (Triclosan), 4-Chlor-3,5-dimethylphenol, 2,2'- Methylen-bis(6-brom-4-chlorphenol), 3-Methyl-4-(1-methylethyl)phenol, 2-Benzyl-4-chlorphenol, 3-(4- Chlorphenoxy)-1,2-propandiol, 3-lod-2-propinylbutylcarbamat, Chlorhexidin, 3,4,4'-Trichlorcarbanilid (TTC), antibakterielle Riechstoffe, Thymol, Thymianöl, Eugenol, Nelkenöl, Menthol, Minzöl, Farnesol, Phenoxyethanol, Glycerinmonocaprinat, Glycerinmonocaprylat, Glycerinmonolaurat (GML), Diglycerinmonocaprinat (DMC), Salicylsäure-N-alkylamide wie z. B. Salicylsäure-n-octylamid oder Salicylsäure-n-decylamid.

Als Enzyminhibitoren sind beispielsweise Esteraseinhibitoren geeignet. Hierbei handelt es sich vorzugsweise um Trialkylcitrate wie Trimethylcitrat, Tripropylcitrat, Triisopropylcitrat, Tributylcitrat und insbesondere Triethylcitrat (Hydagen TM CAT, Cognis GmbH, Düsseldorf/Deutschland). Die Stoffe inhibieren die Enzymaktivität und reduzieren dadurch die Geruchsbildung. Weitere Stoffe, die als Esteraseinhibitoren in Betracht kommen, sind Sterolsulfate oder -phosphate, wie beispielsweise Lanosterin-, Cholesterin-, Campesterin-, Stigmasterin- und Sitosterinsulfat bzw -phosphat, Dicarbonsäuren und deren Ester, wie beispielsweise Glutarsäure, Glutarsäuremonoethylester, Glutarsäurediethylester, Adipinsäure, Adipinsäuremonoethylester, Adipinsäurediethylester, Malonsäure und Malonsäurediethylester, Hydroxycarbnonsäuren und deren Ester wie beispielsweise Citronensäure, Äpfelsäure, Weinsäure oder Weinsäurediethylester, sowie Zinkglycinat.
Als Geruchsabsorber eignen sich Stoffe, die geruchsbildende Verbindungen aufnehmen und weitgehend festhalten können. Sie senken den Partialdruck der einzelnen Komponenten und verringern so auch ihre Ausbreitungsgeschwindigkeit. Wichtig ist, dass dabei Parfums unbeeinträchtigt bleiben müssen. Geruchsabsorber haben keine Wirksamkeit gegen Bakterien. Sie enthalten beispielsweise als Hauptbestandteil ein komplexes Zinksalz der Ricinolsäure oder spezielle, weitgehend geruchsneutrale Duftstoffe, die dem Fachmann als "Fixateure" bekannt sind, wie z. B. Extrakte von Labdanum bzw. Styrax oder bestimmte Abietinsäurederivate. Als Geruchsüberdecker fungieren Riechstoffe oder Parfümöle, die zusätzlich zu ihrer Funktion als Geruchsüberdecker den Deodorantien ihre jeweilige Duftnote verleihen. Als Parfümöle seien beispielsweise genannt Gemische aus natürlichen und synthetischen Riechstoffen. Natürliche Riechstoffe sind Extrakte von Blüten, Stengeln und Blättern, Früchten, Fruchtschalen, Wurzeln, Hölzern, Kräutern und Gräsern, Nadeln und Zweigen sowie Harzen und Balsamen. Weiterhin kommen tierische Rohstoffe in Frage, wie beispielsweise Zibet und Castoreum. Typische synthetische Riechstoffverbindungen sind Produkte vom Typ der Ester, Ether, Aldehyde, Ketone, Alkohole und Kohlenwasserstoffe. Riechstoffverbindungen vom Typ der Ester sind z. B. Benzylacetat, p-tert.-Butylcyclohexylacetat, Linalylacetat, Phenylethylacetat, Linalylbenzoat, Benzylformiat, Allylcyclohexylpropionat, Styrallylpropionat und Benzylsalicylat. Zu den Ethern zählen beispielsweise Benzylethylether, zu den Aldehyden z. B. die linearen Alkanale mit 8 bis 18 Kohlenstoffatomen, Citral, Citronellal, Citronellyloxyacetaldehyd, Cyclamenaldehyd, Hydroxycitronellal, Lilial und Bourgeonal, zu den Ketonen z. B. die Jonone und Methylcedrylketon, zu den Alkoholen Anethol, Citronellol, Eugenol, Isoeugenol, Geraniol, Linalool, Phenylethylalkohol und Terpineol, zu den Kohlenwasserstoffen gehören hauptsächlich die Terpene und Balsame. Bevorzugt werden jedoch Mischungen verschiedener Riechstoffe verwendet, die gemeinsam eine ansprechende Duftnote erzeugen. Auch ätherische Öle geringerer Flüchtigkeit, die meist als Aromakomponenten verwendet werden, eignen sich als Parfümöle, z. B. Salbeiöl, Kamillenöl, Nelkenöl, Melissenöl, Minzenöl, Zimtblätteröl, Lindenblütenöl, Wacholderbeerenöl, Vetiveröl, Olibanöl, Galbanumöl, Labdanumöl und Lavandinöl. Vorzugsweise werden Bergamotteöl, Dihydromyrcenol, Lilial, Lyral, Citronellol, Phenylethylalkohol, alpha -Hexylzimtaldehyd, Geraniol, Benzylaceton, Cyclamenaldehyd, Linalool, Boisambrene Forte, Ambroxan, Indol, Hedione, Sandelice, Citronenöl, Mandarinenöl, Orangenöl, Allylamylglycolat, Cyclovertal, Lavandinöl, Muskateller Salbeiöl, beta-Damascone, Geraniumöl Bourbon, Cyclohexylsalicylat, Vertofix Coeur, Iso-E-Super, Fixolide NP, Evernyl, Iraldein gamma, Phenylessigsäure, Geranylacetat, Benzylacetat, Rosenoxid, Romilat, Irotyl und Floramat allein oder in Mischungen, eingesetzt.

Antitranspirantien reduzieren durch Beeinflussung der Aktivität der ekkrinen Schweißdrüsen die Schweißbildung, und wirken somit Achselnässe und Körpergeruch entgegen. Als adstringierende Antitranspirant-Wirkstoffe eignen sich vor allem Salze des Aluminiums, Zirkoniums oder des Zinks. Solche geeigneten antihydrotisch wirksamen Wirkstoffe sind z. B. Aluminiumchlorid, Aluminiumchlorhydrat, Aluminiumdichlorhydrat, Aluminiumsesquichlorhydrat und deren Komplexverbindungen z. B. mit Propylenglycol-1,2. Aluminiumhydroxyallantoinat, Aluminiumchloridtartrat, Aluminium- Zirkonium-Trichlorohydrat, Aluminium-Zirkonium-Tetrachlorohydrat, Aluminium-Zirkonium-Pentachlorohydrat und deren Komplexverbindungen z. B. mit Aminosäuren wie Glycin.

Zum Mischen bzw. Besprühen sind alle Vorrichtungen geeignet, die eine homogene Verteilung einer Lösung, Pulver, Suspension oder Dispersion auf oder mit den Hydrogel-Polymerteilchen (VP) oder wasserabsorbierenden Polymeren erlauben. Beispiele sind Lödige Mischer (hergestellt durch die Firma *Gebrüder Lödige Maschinenbau GmbH*)*,* Gericke Multi-Flux Mischer (hergestellt durch die Firma *Gericke GmbH*)*,* DRAIS-Mischer (hergestellt durch die Firma *DRAIS GmbH* Spezialmaschinenfabrik Mannheim), Hosokawa Mischer (*Hosokawa Mokron Co., Ltd.*)*,* Ruberg Mischer (hergestellt durch die Firma *Gebr. Ruberg GmbH* & *C0.KG Nieheim*)*,* Hüttlin Coater (hergestellt durch die Firma *BWI Hüttlin GmbH Steinen*)*,* Fließbetttrockner oder Sprühgranulatoren von AMMAG (hergestellt durch die Firma *AMMAG Gunskirchen, Österreich*) oder Heinen (hergestellt durch die Firma *A. Heinen AG Anlagenbau Varel*), Patterson-Kelly-Mischer, NARA-Schaufelmischer, Schneckenmischer, Tellermischer, Wirbelschichttrockner oder Schugi-Mischer. Für das in Kontakt bringen in einer Wirbelschicht können alle dem Fachmann bekannten und geeignet erscheinenden Wirbelschichtverfahren angewandt werden. Beispielsweise kann ein Wirbelschichtcoater eingesetzt werden.

Gegenstand der Erfindung ist auch ein wasserabsorbierendes Polymer, welches durch das erfindungsgemäße Verfahren erhältlich ist.

Offenbart wird außerdem ein Verbund, beinhaltend die durch die erfindungsgemäßen Verfahren erhältlichen wasserabsorbierenden Polymere oder Hydrogel-Polymere und ein Substrat. Es ist dabei bevorzugt, dass die wasserabsorbierenden Polymere oder Hydrogel-Polymere und das Substrat miteinander fest verbunden sind. Als Substrate sind Folien aus Polymeren, wie beispielsweise aus Polyethylen, Polypropylen oder Polyamid, Metalle, Vliese, Fluff, Tissues, Gewebe, natürliche oder synthetische Fasern, oder Schäume bevorzugt. Weiterhin ist es bevorzugt, dass der Verbund mindestens einen Bereich umfasst, welcher wasserabsorbierenden Polymere oder Hydrogel-Polymere in einer Menge im Bereich von etwa 15 bis 100 Gew.-%, vorzugsweise etwa 30 bis 100 Gew.-%, besonders bevorzugt von etwa 50 bis 99,99 Gew.-%, ferner bevorzugt von etwa 60 bis 99,99 Gew.-% und darüber hinaus bevorzugt von etwa 70 bis 99 Gew.-%, jeweils bezogen auf das Gesamtgewicht des betreffenden Bereichs des Verbundes, beinhaltet, wobei dieser Bereich vorzugsweise eine Größe von mindestens 0,01 cm³, vorzugsweise mindestens 0,1 cm³ und am meisten bevorzugt mindestens 0,5 cm³ aufweist.

Offenbart wird auch ein Verfahren zur Herstellung eines Verbundes, wobei die durch das erfindungsgemäße Verfahren erhältlichen Superabsorber und ein Substrat und gegebenenfalls ein Zusatzstoff miteinander in Kontakt gebracht werden. Als Substrate werden vorzugsweise diejenigen Substrate eingesetzt, die bereits vorstehend im Zusammenhang mit dem erfindungsgemäßen Verbund genannt wurden.

Offenbart werden auch chemische Produkte beinhaltend die wasserabsorbierenden Polymere oder Hydrogel-Polymere oder einen Verbund. Bevorzugte chemische Produkte sind insbesondere Schäume, Formkörper, Fasern, Folien, Filme, Kabel, Dichtungsmaterialien, flüssigkeitsaufnehmende Hygieneartikel, insbesondere Windeln und Damenbinden, Träger für pflanzen- oder pilzwachstumsregulierende Mittel oder Pflanzenschutzwirkstoffe, Zusätze für Baustoffe, Verpackungsmaterialien oder Bodenzusätze.

Auch die Verwendung der wasserabsorbierenden Polymere oder des Verbundes in chemischen Produkten, vorzugsweise in den vorstehend genannten chemischen Produkten, insbesondere in Hygieneartikeln wie Windeln oder Damenbinden, sowie die Verwendung der wasserabsorbierenden Polymerpartikel als Träger für pflanzen- oder pilzwachstumsregulierende Mittel oder Pflanzenschutzwirkstoffe wird hier offenbart. Bei der Verwendung als Träger für pflanzen- oder pilzwachstumsregulierende Mittel oder Pflanzenschutzwirkstoffe ist es bevorzugt, dass die pflanzen- oder pilzwachstumsregulierende Mittel oder Pflanzenschutzwirkstoffe über einen durch den Träger kontrollierten Zeitraum abgegeben werden können.

### TESTMETHODEN

Sofern nicht nachfolgend anders angegeben, werden die hierin erfolgten Messungen nach ERT-Verfahren. "ERT"steht für *EDANA Recommended Test* und "EDANA" für *European Disposable and Nonwoven Association.* Alle Testmethoden werden grundsätzlich, wenn nichts anderes angegeben ist, bei einer Umgebungstemperatur von 23±2 °C und einer relativen Luftfeuchte von 50±10 % durchgeführt werden.

### Partikelgrößeverteilung (PSD Particle Size Distribution)

Die Partikelgrößenverteilung der wasserabsorbierenden Polymerpartikel wird analog der von der EDANA empfohlenen Testmethode Nr. WSP 220.3-10 "Particle Size Distribution" bestimmt.

### Zentrifugenretentionskapazität (CRC Centrifuge Retention Capacity)

Die Bestimmung der Zentrifugenretentionskapazität erfolgte gemäß der EDANA (European Disposables and Nonwovens Association) empfohlenen Testmethode Nr. WSP 241.3-10 "Centrifuge retention capacity".

### Bestimmung der "Free Swell Rate" (FSR)

Die Bestimmung der Absorptionsgeschwindigkeit erfolgte über die Messung der sogenannten *"Free Swell Rate* - *FSR"* gemäß dem in der EP-A-0 443 627 auf der Seite 12 beschriebenen Testverfahren.

### Absorption gegen einen Druck von 0,7 psi (AAP)

Die Absorption unter Druck wurde als AAP (Absorption Against Pressure) nach WSP 242.3-10 an der gesamten Kornfraktion bestimmt. Entsprechend wurden 0,90g der Prüfsubstanz (abgesiebt zwischen 150 und 850µm) in einen Testzylinder mit 60,0 mm Innendurchmesser und einem Siebboden (400mesh) eingewogen (Konzentration: 0,032 g/cm²) und gleichmäßig verteilt. Auf die Prüfsubstanz wird ein zylindrisches Gewicht 50 g/cm² = 0,7psi) mit einem Außendurchmesser von 59,2 mm gelegt. In eine Kunststoffschale werden Filterplatten gelegt, die mit einem Filterpapier abgedeckt werden. Die Kunststoffschale wird mit 0,9 %iger NaCI-Lösung gefüllt, bis der Flüssigkeitsspiegel mit der Oberkante der Filterplatten abschließt. Anschließend werden die vorbereiteten Messeinheiten auf die Filterplatten gestellt. Nach einer Quellzeit von 60 Minuten werden die Messeinheiten entnommen und das Gewicht entfernt. Die aufgenommene Flüssigkeitsmenge wird gravimetrisch ermittelt und auf 1 Gramm Prüfsubstanz umgerechnet.

### Bestimmung der Permeabilität (saline flow conductivitv - SFC)

Die Bestimmung der Permeabilität erfolgt durch die Messung der sogenannten "Saline Flow Conductivity-SFC" gemäß dem in der WO-A-95/26209 beschriebenen Testverfahren. Die Einwaage des Superabsorbermaterials beträgt 1,5g anstatt 0,9g.

### Bestimmung "Fixed Height Absorption" (FHA) (0,3 psi, 20 cm)

Die Bestimmung erfolgt durch die Messung der sogenannten "fixed height absorption" (FHA) gemäß dem in der EP 149 34 53 A1 beschriebenen Testverfahren auf der Seite 9 [0078] bis Seite 10 Absatz [0087].

### Bestimmung der Oberflächenspannung (OFS)

Die Bestimmung erfolgt durch die Messung gemäß dem in EP 1 493 453 A1 beschriebenen Testverfahren gemäß Seite 12 Absatz [0105] bis [0111]. Es wurde ein Tensiometer der Marke Kruss K11 mit einer Wilhelmyplatte verwendet.

### Bestimmung der extrahierbaren Polyether Anteile

Die Bestimmung der extrahierbaren Anteile der Polyether ist angelehnt an die HPTLC Methode(H-III 14a Stand 30.05.95) Gemeinschaftsarbeiten der DGF 152 Mitteilung. Die Proben wurden gemahlen, mit Methanol im Soxhlet warm extrahiert (1Stunde), eingeengt und danach dünnschichtchromatographisch bestimmt und zwar auf TLC-Platten aus Kieselgel 60 mit den Abmessungen 20x 20 cm. Die Auftragung der Proben erfolgt standardisiert. Als Fließmittel wurde eine Mischung aus Chloroform/Methanol/ Wasser(88/11/1 Volumenprozente) verwendet. Die Derivatisierung erfolgte mit dem Dragendorff's Reagenz. Es wurde ein TLC Scanner Camag CD60 mit einer Messwellenlänge von 520 nm verwendet. Die Auswertung erfolgte über die Peakflächen die ins Verhältnis zu den Peakflächen der Standards gesetzt wurden.

### Bestimmung der "BET Oberfläche"

Die BET Oberfläche der Superabsorber wurde mittels eines "tristar 3020 Kr" Geräts von der Firma Micromeritics (mit Krypton Gas anstelle von Stickstoff) bestimmt und analog der ISO 9277 gearbeitet. Die Einwaage betrug 4,6 g und wurde über Nacht bei Raumtemperatur und einem Vakuum von 0,02 mbar evakuiert und zurückgewogen. Es erfolgte eine Evakuierung am Analysenport, wobei die Evakuierung über einen Zeitraum von 6 Minutenerfolgt wenn 10mm HG erreicht worden sind. Die Totvolumenbestimmung erfolgte ebenfalls. Die Analysentemperatur betrug 77,1 K. Als p0 wurde 2,32 mmHG (unter Verwendung von Krypton Gas) definiert. Die Ausgleichszeit für das Gleichgewicht wurde mindestens 10 mal gemessen (5 sec, bei einer Änderungsrate von kleiner 0,01%).

### Beispiele

Die nachfolgenden Beispiele dienen der näheren Erläuterung der Erfindung ohne sie jedoch hierauf zu beschränken.

**Tabelle 1**

| **Tensid - Beispiel Nr.** | **Name (supplier)** | **Beschreibung (inkl. Reihenfolge der Blöcke, soweit zutreffend)** | **Copolymer gefahren** |
|---|---|---|---|
| 1 | PE 8482 (Evonik Industries) | Allyl ether-[(EO)7-(PO)3]-H | Statistisch |
| 2 | Blemmer®50PEP-300 (NOF Corporation) | Methacrylate ester-[(EO)3,5-(PO)2,5]-H | Statistisch |
| 3 | Blemmer®55PET-800 (NOF Corporation) | Methacrylate ester-[(EO)10-(EO)5]-H | Statistisch |
| 4 | Blemmer®70PEP-350B (NOF Corporation) | Methacrylate ester-[EO]5-[PO]2-H | als Block |
| 5 | Natrium Laurylethersulfat (Hansa-Group) | Natrium Laurylethersulfat | - |

Im Rahmen der vorliegenden Erfindung wird unter dem Begriff "EO" grundsätzlich Ethylenglykoleinheit bezeichnet. Unter dem Begriff "PO" wird grundsätzlich Propylenglykoleinheit verstanden und unter dem Begriff "BO" wird grundsätzlich eine Butylenglykoleinheit verstanden.

Die nachfolgenden erfindungsgemäßen Beispiele, zeigen den synergistischen Effekt auf den FSR-Wert durch die gleichzeitige Verwendung von polymerisierbaren Tensiden und Carbonat. Hierbei wurde eine definierte Partikelgrößenverteilung (PSD) verwendet (150µm bis 710µm). Als Standardmischung wird eine Zusammensetzung von 4 Partikelfraktionen vor der Oberflächennachvernetzung eingesetzt, die sich wie folgt verteilen: 15 Gew.% einer Partikelgröße von 150 µm bis 300µm; 50 Gew.% 300µm bis 500µm; 30 Gew.% 500µm bis 600µm und 5 Gew.% 600µm bis 710µm. Die PSD wird für die Hydrogel-Polymere eingestellt.

In der EP1 701786 B1 wird in den Absätzen [0115 bis 0117] das (Massenmittel der Partikeldurchmesserals D50 definiert. Erfindungsgemäß wird ein Bereich zwischen 300 und 600µm bevorzugt. Besonders bevorzugt ist ein Bereich von 350 und 550µm, und ganz besonders bevorzugt ein Bereich zwischen 400 und 500µm. Bevorzugt ist ein Blähmittel, bei dem mehr als 35 Gew % der Partikel eine Teilchengröße von 100-300µm aufweisen.
Unter dem Begriff "SX", wie er in der Beschreibung verwendet wird, versteht man die thermische Oberflächennachvernetzung des Vorproduktes (VP). Das Vorprodukt entspricht dem erzeugten Hydrogel-Polymer nach der ersten Trocknung, mit der vorgenannten Kornverteilung.

Grundsätzlich beziehen sich die prozentualen Angaben des Tensides auf die Acrylsäure (wenn nicht anderes erwähnt wird 320 g) und die des Carbonates auf den Ansatz (normalerweise 1000g).

### Beispiel 1

Das Tensid Nr. 1 PE 8482 "Allyl ether-[(EO)7-(PO)3]-H" aus der Tabelle 1 wurde als Additiv eingesetzt. Die Mengen an eingesetztem Tensid variierten. Die prozentualen Angaben des Tensides beziehen sich auf die Acrylsäure und die des Carbonates auf den Ansatz.

### Verwendung ohne polymerisierbares Tensid und Soda:

### Beispiel A (Referenz)

In 975,762g einer wässrigen Lösung aus Natriumacrylat mit einem Neutralisationsgrad von 70 mol% (bez. Acrylsäure) sowie einer gesamt Monomerkonzentration von 39,8 % wurden 0,590 g Polyethylenglycol300diacrylat (0,15% bez. auf Acrylsäure/Estergehalt entsprechend 81%) und 1,263 g Polyethylenglycol-(440)monoallyletheracrylat (0,30% bez. auf Acrylsäure/ Estergehalt entsprechend 76%) als Vernetzer gelöst. Die Monomerenlösung wurde in einem Kunststoff-Polymerisationsgefäß für 30 Minuten mit Stickstoff durchgespült, um den gelösten Sauerstoff zu entfernen. Bei einer Temperatur von 4 °C wurde die Polymerisation durch die aufeinanderfolgende Zugabe von 0,3 g Natriumperoxodisulfat in 10 g dest. Wasser, 0,07 g 35 %ige Wasserstoffperoxidlösung in 10 g dest. Wasser und 0,015 g Ascorbinsäure in 2 g dest. Wasser gestartet. Nachdem die Endtemperatur (ca. 100 °C) erreicht wurde, zerkleinerte man das Gel mit einem Fleischwolf und trocknete 2 h bei 150 °C in einem Umlufttrockenschrank. Das getrocknete Vorprodukt wurde grob zerstoßen, gemahlen und auf die vorbeschriebene Kornverteilung eingestellt.

### Verwendung ohne polymerisierbares Tensid und 0,1% Soda leicht

### Beispiel B (Referenz)

In 974,762g einer wässrigen Lösung aus Natriumacrylat mit einem Neutralisationsgrad von 70 mol% (bez. Acrylsäure) sowie einer gesamt Monomerkonzentration von 39,8 % wurden 0,590 g Polyethylenglycol300diacrylat (0,15% bez. auf Acrylsäure/Estergehalt entsprechend 81%) und 1,263 g Polyethylenglycol-(440)monoallyletheracrylat (0,30% bez. auf Acrylsäure/ Estergehalt entsprechend 76%) als Vernetzer gelöst. Die Monomerenlösung wurde in einem Kunststoff-Polymerisationsgefäß für 30 Minuten mit Stickstoff durchgespült, um den gelösten Sauerstoff zu entfernen. Bei einer Temperatur von 4 °C wurden 1g fein calcinierte Soda (Fa. Solvay) zugesetzt und die Polymerisation durch die aufeinanderfolgende Zugabe von 0,3 g Natriumperoxodisulfat in 10 g dest. Wasser, 0,07 g 35 %ige Wasserstoffperoxidlösung in 10 g dest. Wasser und 0,015 g Ascorbinsäure in 2 g dest. Wasser gestartet. Nachdem die Endtemperatur (ca. 100 °C) erreicht wurde, zerkleinerte man das Gel mit einem Fleischwolf und trocknete 2 h bei 150 °C in einem Umlufttrockenschrank Das getrocknete Vorprodukt wurde grob zerstoßen, gemahlen und auf die vorbeschriebene Kornverteilung eingestellt.

### Verwendung von 0,3% polymerisierbarem Tensid:

### Beispiel C

In 966,162g einer wässrigen Lösung aus Natriumacrylat mit einem Neutralisationsgrad von 70 mol% (bez. Acrylsäure) sowie einer gesamt Monomerkonzentration von 40,2 % wurden 0,590 g Polyethylenglycol300diacrylat (0,15% bez. auf Acrylsäure/Estergehalt entsprechend 81%) und 1,263 g Polyethylenglycol-(440)monoallyletheracrylat (0,30% bez. auf Acrylsäure/ Estergehalt entsprechend 76%) als Vernetzer gelöst. Dieser Lösung wurden anschließend 9,6g einer 10%igen wässrigen Lösung des Comonomers Nr. 1 PE 8482 "Allyl ether-[(EO)7-(PO)3]-H" zugegeben und die Monomerenlösung wird in einem Kunststoff-Polymerisationsgefäß für 30 Minuten mit Stickstoff durchgespült, um den gelösten Sauerstoff zu entfernen. Bei einer Temperatur von 4 °C wurde die Polymerisation durch die aufeinanderfolgende Zugabe von 0,3 g Natriumperoxodisulfat in 10 g dest. Wasser, 0,07 g 35 %ige Wasserstoffperoxidlösung in 10 g dest. Wasser und 0,015 g Ascorbinsäure in 2 g dest. Wasser gestartet. Nachdem die Endtemperatur (ca. 100 °C) erreicht wurde, zerkleinerte man das Gel mit einem Fleischwolf und trocknete 2 h bei 150 °C in einem Umlufttrockenschrank. Das getrocknete Vorprodukt wurde grob zerstoßen, gemahlen und auf die vorbeschriebene Kornverteilung eingestellt.

### Verwendung von 0,1% polymerisierbarem Tensid und 0,1% Soda leicht

### Beispiel D

In 971,562g einer wässrigen Lösung aus Natriumacrylat mit einem Neutralisationsgrad von 70 mol% (bez. Acrylsäure) sowie einer gesamt Monomerkonzentration von 40,0 % wurden 0,590 g Polyethylenglycol300diacrylat (0,15% bez. auf Acrylsäure/Estergehalt entsprechend 81%) und 1,263 g Polyethylenglycol-(440)monoallyletheracrylat (0,30% bez. auf Acrylsäure/ Estergehalt entsprechend 76%) als Vernetzer gelöst. Dieser Lösung wurden anschließend 3,2g einer 10%igen wässrigen Lösung des Comonomers Nr. 1 PE 8482 "Allyl ether-[(EO)7-(PO)3]-H" zugegeben und die Monomerenlösung wird in einem Kunststoff-Polymerisationsgefäß für 30 Minuten mit Stickstoff durchgespült, um den gelösten Sauerstoff zu entfernen. Bei einer Temperatur von 4 °C wurden 1g fein calciniertes Soda (Fa. Solvay) zugesetzt und die Polymerisation durch die aufeinanderfolgende Zugabe von 0,3 g Natriumperoxodisulfat in 10 g dest. Wasser, 0,07 g 35 %ige Wasserstoffperoxidlösung in 10 g dest. Wasser und 0,015 g Ascorbinsäure in 2 g dest. Wasser gestartet. Nachdem die Endtemperatur (ca. 100 °C) erreicht wurde, zerkleinerte man das Gel mit einem Fleischwolf und trocknete 2 h bei 150 °C in einem Umlufttrockenschrank. Das getrocknete Vorprodukt wurde grob zerstoßen, gemahlen und auf die vorbeschriebene Kornverteilung eingestellt.

### Verwendung von 0,2% polymerisierbarem Tensid und 0,1% Soda leicht

### Beispiel E

In 968,362g einer wässrigen Lösung aus Natriumacrylat mit einem Neutralisationsgrad von 70 mol% (bez. Acrylsäure) sowie einer gesamt Monomerkonzentration von 40,1 % wurden 0,590 g Polyethylenglycol300diacrylat (0,15% bez. auf Acrylsäure/Estergehalt entsprechend 81%) und 1,263 g Polyethylenglycol-(440)monoallyletheracrylat (0,30% bez. auf Acrylsäure/ Estergehalt entsprechend 76%) als Vernetzer gelöst. Dieser Lösung wurden anschließend 6,4g einer 10%igen wässrigen Lösung des Comonomers Nr. 1 PE 8482 "Allyl ether-[(EO)7-(PO)3]-H" zugegeben und die Monomerenlösung wird in einem Kunststoff-Polymerisationsgefäß für 30 Minuten mit Stickstoff durchgespült, um den gelösten Sauerstoff zu entfernen. Bei einer Temperatur von 4 °C wurden 1g fein calciniertes Soda (Fa. Solvay) zugesetzt und die Polymerisation durch die aufeinanderfolgende Zugabe von 0,3 g Natriumperoxodisulfat in 10 g dest. Wasser, 0,07 g 35 %ige Wasserstoffperoxidlösung in 10 g dest. Wasser und 0,015 g Ascorbinsäure in 2 g dest. Wasser gestartet. Nachdem die Endtemperatur (ca. 100 °C) erreicht wurde, zerkleinerte man das Gel mit einem Fleischwolf und trocknete 2 h bei 150 °C in einem Umlufttrockenschrank. Das getrocknete Vorprodukt wurde grob zerstoßen, gemahlen und auf die vorbeschriebene Kornverteilung eingestellt.

### Verwendung von 0,3% polymerisierbarem Tensid und 0,1% Soda leicht

### Beispiel F

In 965,162g einer wässrigen Lösung aus Natriumacrylat mit einem Neutralisationsgrad von 70 mol% (bez. Acrylsäure) sowie einer gesamt Monomerkonzentration von 40,2 % wurden 0,590 g Polyethylenglycol300diacrylat (0,15% bez. auf Acrylsäure/Estergehalt entsprechend 81%) und 1,263 g Polyethylenglycol-(440)monoallyletheracrylat (0,30% bez. auf Acrylsäure/ Estergehalt entsprechend 76%) als Vernetzer gelöst. Dieser Lösung wurden anschließend 9,6g einer 10%igen wässrigen Lösung des Comonomers Nr. 1 PE 8482 "Allyl ether-[(EO)7-(PO)3]-H" zugegeben und die Monomerenlösung wird in einem Kunststoff-Polymerisationsgefäß für 30 Minuten mit Stickstoff durchgespült, um den gelösten Sauerstoff zu entfernen. Bei einer Temperatur von 4 °C wurden 1g fein calciniertes Soda (Fa. Solvay) zugesetzt und die Polymerisation durch die aufeinanderfolgende Zugabe von 0,3 g Natriumperoxodisulfat in 10 g dest. Wasser, 0,07 g 35 %ige Wasserstoffperoxidlösung in 10 g dest. Wasser und 0,015 g Ascorbinsäure in 2 g dest. Wasser gestartet. Nachdem die Endtemperatur (ca. 100 °C) erreicht wurde, zerkleinerte man das Gel mit einem Fleischwolf und trocknete 2 h bei 150 °C in einem Umlufttrockenschrank. Das getrocknete Vorprodukt wurde grob zerstoßen, gemahlen und auf die vorbeschriebene Kornverteilung eingestellt. Die Nachvernetzung der so erhaltenen Vorprodukte ("VP") erfolgte durch die Beschichtung mit einer Lösung bestehend aus Ethylencarbonat/Wasser/Al-lactat/Al-sulfat im Verhältnis 1/3/0,4/0,3% bez. auf 100g Superabsorber bei 170°C über einen Zeitraum von 90min. im Trockenschrank.

Die Ergebnisse für die Beispiele 1A-1F sind in der Tabelle 2 zusammengefasst:

**Tabelle 2 PE 8482:**

| **Beispiel Nr.1** | **Zusatz Surfactant Monomer** | **Zusatz Soda leicht** | **CRC (VP)** [g/g] | **CRC (SX)** [g/g] | **FSR (SX)** [g/g/s] | **OFS** [mN/m] | **AAP 0,7psi** [g/g] | **SFC 1.5g** [units] | **FHA** [g/g] |
|---|---|---|---|---|---|---|---|---|---|
| A | 0% | 0% | 33,7 | 29,6 | 0,24 | 71,3 | 26,3 | 100 | 25,6 |
| B | 0% | 0,1% | 32,0 | 28,2 | 0,29 | 71,1 | 26,1 | 150 | 26,1 |
| C | 0,3% | 0% | 34,5 | 28,9 | 0,27 | 66,6 | 25,2 | 105 | 24,2 |
| D | 0,1% | 0,1% | 33,6 | 29,5 | 0,35 | 67,4 | 25,4 | 78 | 25,2 |
| E | 0,2% | 0,1% | 33,8 | 27,6 | 0,33 | 66,5 | 25,0 | 131 | 24,6 |
| F | 0,3% | 0,1% | 33,6 | 28,5 | 0,34 | 65,6 | 25,3 | 92 | 24,8 |

### Referenz Beispiel 2

Der Versuchsaufbau entspricht Beispiel 1 nur das als Tensid Blemmer®50PEP-300 "Methacrylate ester-[(EO)3,5-(PO)2,5]-H" eingesetzt wird, welches zuvor in einem Teil der AcS vorgelöst wurde (Beispiele C bis F). Die Mengen des eingesetzten Tensides variierten. Die Nachvernetzung der so erhaltenen Vorprodukte erfolgte durch die Beschichtung mit einer Lösung bestehend aus Ethylencarbonat/Wasser/Al-lactat/Al-sulfat im Verhältnis 1/3/0,4/0,3% bez. auf 100g Superabsorber bei 170°C über einen Zeitraum von 90min. im Trockenschrank.

### Verwendung von 0,3% polymerisierbarem Tensid:

### Beispiel C

In 974,802g einer wässrigen Lösung aus Natriumacrylat mit einem Neutralisationsgrad von 70 mol% (bez. Acrylsäure) sowie einer gesamt Monomerkonzentration von 39,8 % wurden 0,590 g Polyethylenglycol300diacrylat (0,15% bez. auf Acrylsäure/Estergehalt entsprechend 81%) und 1,263 g Polyethylenglycol-(440)monoallyletheracrylat (0,30% bez. auf Acrylsäure/ Estergehalt entsprechend 76%) als Vernetzer gelöst. Dieser Lösung wurden anschließend 0,96g des in AcS vorgelösten Comonomers Nr. 2 Blemmer®50PEP-300 "Methacrylate ester-[(EO)3,5-(PO)2,5]-H" zugegeben und die Monomerenlösung wird in einem Kunststoff-Polymerisationsgefäß für 30 Minuten mit Stickstoff durchgespült, um den gelösten Sauerstoff zu entfernen. Bei einer Temperatur von 4 °C wurde die Polymerisation durch die aufeinanderfolgende Zugabe von 0,3 g Natriumperoxodisulfat in 10 g dest. Wasser, 0,07 g 35 %ige Wasserstoffperoxidlösung in 10 g dest. Wasser und 0,015 g Ascorbinsäure in 2 g dest. Wasser gestartet. Nachdem die Endtemperatur (ca. 100 °C) erreicht wurde, zerkleinerte man das Gel mit einem Fleischwolf und trocknete 2 h bei 150 °C in einem Umlufttrockenschrank. Das getrocknete Vorprodukt wurde grob zerstoßen, gemahlen und auf die vorbeschriebene Kornverteilung eingestellt..

### Verwendung von 0,1% polymerisierbarem Tensid und 0,1% Soda leicht

### Beispiel D

In 974,442g einer wässrigen Lösung aus Natriumacrylat mit einem Neutralisationsgrad von 70 mol% (bez. Acrylsäure) sowie einer gesamt Monomerkonzentration von 39,9 % wurden 0,590 g Polyethylenglycol300diacrylat (0,15% bez. auf Acrylsäure/Estergehalt entsprechend 81%) und 1,263 g Polyethylenglycol-(440)monoallyletheracrylat (0,30% bez. auf Acrylsäure/ Estergehalt entsprechend 76%) als Vernetzer gelöst. Dieser Lösung wurden anschließend 0,32g des in AcS vorgelösten Comonomers Nr. 2 Blemmer®50PEP-300 "Methacrylate ester-[(EO)3,5-(PO)2,5]-H" zugegeben und die Monomerenlösung wird in einem Kunststoff-Polymerisationsgefäß für 30 Minuten mit Stickstoff durchgespült, um den gelösten Sauerstoff zu entfernen. Bei einer Temperatur von 4 °C wurden 1g fein calciniertes Soda (Fa. Solvay) zugesetzt und die Polymerisation durch die aufeinanderfolgende Zugabe von 0,3 g Natriumperoxodisulfat in 10 g dest. Wasser, 0,07 g 35 %ige Wasserstoffperoxidlösung in 10 g dest. Wasser und 0,015 g Ascorbinsäure in 2 g dest. Wasser gestartet. Nachdem die Endtemperatur (ca. 100 °C) erreicht wurde, zerkleinerte man das Gel mit einem Fleischwolf und trocknete 2 h bei 150 °C in einem Umlufttrockenschrank. Das getrocknete Vorprodukt wurde grob zerstoßen, gemahlen und auf die vorbeschriebene Kornverteilung eingestellt.

### Beispiel E

In 974,122g einer wässrigen Lösung aus Natriumacrylat mit einem Neutralisationsgrad von 70 mol% (bez. Acrylsäure) sowie einer gesamt Monomerkonzentration von 39,9 % wurden 0,590 g Polyethylenglycol300diacrylat (0,15% bez. auf Acrylsäure/Estergehalt entsprechend 81%) und 1,263 g Polyethylenglycol-(440)monoallyletheracrylat (0,30% bez. auf Acrylsäure/ Estergehalt entsprechend 76%) als Vernetzer gelöst. Dieser Lösung wurden anschließend 0,64g des in AcS vorgelösten Comonomers Nr. 2 Blemmer®50PEP-300 "Methacrylate ester-[(EO)3,5-(PO)2,5]-H" zugegeben und die Monomerenlösung wird in einem Kunststoff-Polymerisationsgefäß für 30 Minuten mit Stickstoff durchgespült, um den gelösten Sauerstoff zu entfernen. Bei einer Temperatur von 4 °C wurden 1g fein calciniertes Soda (Fa. Solvay) zugesetzt und die Polymerisation durch die aufeinanderfolgende Zugabe von 0,3 g Natriumperoxodisulfat in 10 g dest. Wasser, 0,07 g 35 %ige Wasserstoffperoxidlösung in 10 g dest. Wasser und 0,015 g Ascorbinsäure in 2 g dest. Wasser gestartet. Nachdem die Endtemperatur (ca. 100 °C) erreicht wurde, zerkleinerte man das Gel mit einem Fleischwolf und trocknete 2 h bei 150 °C in einem Umlufttrockenschrank. Das getrocknete Vorprodukt wurde grob zerstoßen, gemahlen und auf die vorbeschriebene Kornverteilung eingestellt.

### Beispiel F

In 973,802g einer wässrigen Lösung aus Natriumacrylat mit einem Neutralisationsgrad von 70 mol% (bez. Acrylsäure) sowie einer gesamt Monomerkonzentration von 39,9 % wurden 0,590 g Polyethylenglycol300diacrylat (0,15% bez. auf Acrylsäure/Estergehalt entsprechend 81%) und 1,263 g Polyethylenglycol-(440)monoallyletheracrylat (0,30% bez. auf Acrylsäure/ Estergehalt entsprechend 76%) als Vernetzer gelöst. Dieser Lösung wurden anschließend 0,96g des in AcS vorgelösten Comonomers Nr. 2 Blemmer®50PEP-300 "Methacrylate ester-[(EO)3,5-(PO)2,5]-H" zugegeben und die Monomerenlösung wird in einem Kunststoff-Polymerisationsgefäß für 30 Minuten mit Stickstoff durchgespült, um den gelösten Sauerstoff zu entfernen. Bei einer Temperatur von 4 °C wurden 1g fein calciniertes Soda (Fa. Solvay) zugesetzt und die Polymerisation durch die aufeinanderfolgende Zugabe von 0,3 g Natriumperoxodisulfat in 10 g dest. Wasser, 0,07 g 35 %ige Wasserstoffperoxidlösung in 10 g dest. Wasser und 0,015 g Ascorbinsäure in 2 g dest. Wasser gestartet. Nachdem die Endtemperatur (ca. 100 °C) erreicht wurde, zerkleinerte man das Gel mit einem Fleischwolf und trocknete 2 h bei 150 °C in einem Umlufttrockenschrank. Das getrocknete Vorprodukt wurde grob zerstoßen, gemahlen und auf die vorbeschriebene Kornverteilung eingestellt.

Die Ergebnisse für die Beispiele 2A-F sind in der Tabelle 3 zusammengefasst:

**Tabelle 3 Blemmer®50PEP-300**

| **Beispiel Nr. 2** | **Zusatz Surfactant Monomer** | **Zusatz Soda leicht** | **CRC (VP)** [g/g] | **CRC (SX)** [g/g] | **FSR (SX)** [g/g/s] | **OFS** [mN/m] | **AAP 0,7psi** [g/g] | **SFC 1.5g** [units] | **FHA** [g/g] |
|---|---|---|---|---|---|---|---|---|---|
| A | 0% | 0% | 33,7 | 29,6 | 0,24 | 71,3 | 26,3 | 100 | 25,6 |
| B | 0% | 0,1% | 32,0 | 28,2 | 0,29 | 71,1 | 26,1 | 150 | 26,1 |
| C | 0,3% | 0% | 31,8 | 26,8 | 0,24 | 67,5 | 24,5 | 189 | 22,5 |
| D | 0,1% | 0,1% | 32,9 | 27,8 | 0,34 | 68,5 | 25,1 | 113 | 25,1 |
| E | 0,2% | 0,1% | 32,2 | 26,6 | 0,30 | 67,8 | 24,9 | 125 | 23,8 |
| F | 0,3% | 0,1% | 31,8 | 26,6 | 0,31 | 67,9 | 25,1 | 144 | 22,9 |

### Referenz Beispiel 3

Der Versuchsaufbau entspricht Beispiel 2 nur das als Tensid Blemmer®55PET-800 "Methacrylate ester-[(EO)10-(BO)5]-H" eingesetzt wird. Die Mengen des eingesetzten Tensides variierten. Die Nachvernetzung der so erhaltenen Vorprodukte erfolgte durch die Beschichtung mit einer Lösung bestehend aus Ethylencarbonat/Wasser/Al-lactat/Al-sulfat im Verhältnis 1/3/0,4/0,3% bez. auf 100g Superabsorber bei 170°C über einen Zeitraum von 90min. im Trockenschrank.

Die Ergebnisse für die Beispiele zu 3 sind in der Tabelle 4 zusammengefasst:

**Tabelle 4 Blemmer®55PET-800**

| **Beispiel Nr. 3** | **Zusatz Surfactant Monomer** | **Zusatz Soda leicht** | **CRC (VP)** [g/g] | **CRC (SX)** [g/g] | **FSR (SX)** [g/g/s] | **OFS** [mN/m] | **AAP 0,7psi** [g/g] | **SFC 1.5g** [units] | **FHA** [g/g] |
|---|---|---|---|---|---|---|---|---|---|
| A | 0% | 0% | 33,7 | 29,6 | 0,24 | 71,3 | 26,3 | 100 | 25,6 |
| B | 0% | 0,1% | 32,0 | 28,2 | 0,29 | 71,1 | 26,1 | 150 | 26,1 |
| E | 0,2% | 0,1% | 32,5 | 27,5 | 0,32 | 57,6 | 26,0 | 85 | 23,2 |

### Referenz Beispiel 4

Der Versuchsaufbau entspricht Beispiel 2 nur das als Tensid Blemmer®70PEP-350B "Methacrylate ester-[EO]5-[PO]2-H" eingesetzt wird. Die Mengen des eingesetzten Tensides variierten. Die Nachvernetzung der so erhaltenen Vorprodukte erfolgte durch die Beschichtung mit einer Lösung bestehend aus Ethylencarbonat/Wasser/Al-lactat/Al-sulfat im Verhältnis 1/3/0,4/0,3% bez. auf 100g Superabsorber bei 170°C über einen Zeitraum von 90min. im Trockenschrank.

Die Ergebnisse für die Beispiele 4A-F sind in der Tabelle 5 zusammengefasst:

**Tabelle 5 Blemmer®70PEP-350B**

| **Beispiel Nr. 4** | **Zusatz Surfactant Monomer** | **Zusatz Soda leicht** | **CRC (VP)** [g/g] | **CRC (SX)** [g/g] | **FSR (SX)** [g/g/s] | **OFS** [mN/m] | **AAP 0,7psi** [g/g] | **SFC 1.5g** [units] | **FHA** [g/g] |
|---|---|---|---|---|---|---|---|---|---|
| A | 0% | 0% | 33,7 | 29,6 | 0,24 | 71,3 | 26,3 | 100 | 25,6 |
| B | 0% | 0,1% | 32,0 | 28,2 | 0,29 | 71,1 | 26,1 | 150 | 26,1 |
| C | 0,3% | 0% | 31,2 | 27,1 | 0,26 | 68,5 | 25,4 | 161 | 24,1 |
| D | 0,1% | 0,1% | 32,3 | 27 | 0,32 | 70,1 | 26,3 | 104 | 25,1 |
| E | 0,2% | 0,1% | 32,7 | 27,3 | 0,33 | 68,6 | 25,7 | 134 | 24,8 |
| F | 0,3% | 0,1% | 32,1 | 27,1 | 0,33 | 68,3 | 25,2 | 150 | 25,0 |

### Beispiel 5 (Vergleichsbeispiel)

Der Versuchsaufbau entspricht Beispiel 1 nur dass als Tensid Natrium Laurylethersulfat (Hansa-Group AG, Duisburg) eingesetzt wurde. NaLES ist kein einpolymerisiebares Tensid. Die Mengen an eingesetztem Tensid und Carbonat variierten.

Die Oberflächennachvernetzung der so erhaltenen Vorprodukte erfolgt durch die Beschichtung mit einer Lösung bestehend aus Ethylencarbonat/Wasser/Al-lactat/Al-sulfat im Verhältnis 1/3/0,4/0,3% bez. auf 100g Vorprodukt und nachfolgender Erhitzung bei 170°C über einen Zeitraum von 90min. im Trockenschrank.

Die Ergebnisse für die Beispiele 5B-5D sind in der Tabelle 6 zusammengefasst:

**Tabelle 6 Natrium Laurylethersulfat**

| **Beispiel Nr. 5** | **Zusatz Surfactant Monomer** | **Zusatz Soda leicht** | **CRC VP** [g/g] | **CRC (SX)** [g/g] | **FSR (SX)** [g/g/s] | **OFS [mN/** m] | **AAP 0,7psi** [g/g] | **SFC 1.5g** [units] | **FHA** [g/g] |
|---|---|---|---|---|---|---|---|---|---|
| A | 0% | 0% | 33,7 | 29,6 | 0,24 | 71,3 | 26,3 | 100 | 25,6 |
| B | 0% | 0,2% | 31,5** | 28,3 | 0,46 | 68,6 | 25,7 | 83 | 23,3 |
| C | 0,3% | 0% | 31,6* | 28,3 | 0,42 | 38,0 | 24,9 | 68 | 16,2 |
| D | 0,3% | 0,2% | 32,8** | 28,2 | 0,57 | 37,5 | 25,2 | 62 | 16,3 |

| | | | | | | | | | |
|---|---|---|---|---|---|---|---|---|---|
| * Vernetzung PEG300DA / PEGMAE-A : 0,2%/0,4% bez. auf Acrylsäure ** Vernetzung PEG300DA / PEGMAE-A : 0,18%/0,36% bez. auf Acrylsäure | | | | | | | | | |

Bei dem nicht einpolymerisierbaren Tensid zeigte sich eine erhebliche Verschlechterung des FHA-Wertes.

Die OFS-Werte der wasserabsorbierenden Polymere gemäß den vorstehend beschriebenen erfindungsgemäß Beispielen liegen über 50 mN/m, bevorzugt über 55 mN/m, besonders bevorzugt über 60 mN/m und am meisten bevorzugt über 62 mN/m. Der OFS-Wert darf einen Wert von 72 mN/m nicht überschreiten. Vorteilhafterweise wird hierdurch der Rewet-Wert (z.B. Backsheet rewet) in den Windeln minimiert und die Kapillarität des Superabsorbers im Absorbent Core der Windel eingehalten, die somit hohen FHA Werten entsprechen. Durch die Verwendung von einpolymerisierbaren tensidischen Comonomeren wird eine starke Erniedrigung der OFS-Werte vermieden.

Vorteilhafterweise führt die gleichzeitige Verwendung von den tensidischen Comonomeren und Carbonat zu einer synergistischen Steigerung der Werte des FSR und des FHA. Erfindungsgemäß zeigt sich im Besonderen der vorgenannte Effekt bei wasserabsorbierenden Polymeren die einen OFS-Wert, größer als 60 aufweisen. Die erfindungsgemäßen wasserabsorbierenden Polymeren zeigen zusätzlich gute Parametereigenschaften bezüglich der CRC-, SFC-, und AAP-Werte.
Gemäß der nachfolgenden Tabelle konnte gezeigt werden, dass erfindungsgemäß der Einbau der copolymerisierbaren Tenside ("Surfactant Monomeren", SM) in das Netzwerk des Hydrogel-Polymers erfolgte. Die extrahierbaren Anteile sind in der letzen Spalte der Tabelle wiedergegeben. Hierbei wurde die Menge an extrahierbaren Polyetheranteilen bezogen auf die eingesetzte Gesamtmenge an copolymerisierbaren Tensiden (SM) für die Polymerisation in % untersucht. Erfindungsgemäß wurden grundsätzlich weniger als 8% extrahierbare Tenside/Surfactant-Monomere nachgewiesen. Hierdurch konnte nachgewiesen werden, dass das Tensid in die Polymermatrix des Superabsorbers eingebaut wurde.

| **Beispiel Nr.** | **Extrahierbarer Polyether-Anteil (ppm)** | **% bezogen auf eingesetzte polyether-Menge** |
|---|---|---|
| **1A** | < 10 | < 0,4 % |
| **1C** | 69 | 2,8 % |
| **1F** | 172 | 7,0 % |
| **2C** | < 10 | < 0,4 % |
| **2F** | < 10 | < 0,4 % |
| **3C** | 14 | 0,6 % |
| **3F** | 18 | 0,7 % |
| **4C** | < 10 | < 0,4 % |
| **4F** | <10 | < 0,4 % |

## Patentansprüche

1. Ein Verfahren zur Herstellung einer wasserabsorbierenden Polymerzusammensetzung, umfassend die Verfahrenschritte
**(i)** Mischen von
(α1) 0,1 bis 99,999 Gew.-%, bevorzugt 20 bis 98,99 Gew.-% und besonders bevorzugt 30 bis 98,95 Gew.-% polymerisierbaren, ethylenisch ungesättigten, säuregruppenhaltigen Monomeren oder deren Salze oder polymerisierbaren, ethylenisch ungesättigten, einen protonierten oder quarternierten Stickstoff beinhaltenden Monomeren, oder deren Mischungen, wobei mindestens ethylenisch ungesättigte, säuregruppenhaltige Monomere, vorzugsweise Acrylsäure, beinhaltende Mischungen besonders bevorzugt sind,
(α2) 0 bis 70 Gew.-%, bevorzugt 1 bis 60 Gew.-% und besonders bevorzugt 1 bis 40 Gew.-% polymerisierbaren, ethylenisch ungesättigten, mit (α1) copolymerisierbaren Monomeren,
(α3) 0,001 bis 10 Gew.-%, bevorzugt 0,01 bis 7 Gew.-% und besonders bevorzugt 0,05 bis 5 Gew.-% eines oder mehrerer Vernetzer,
(α4) 0 bis 30 Gew.-%, bevorzugt 1 bis 20 Gew.-% und besonders bevorzugt 5 bis 10 Gew.-% wasserlöslichen Polymeren, sowie
(α5) 0 bis 20 Gew.-%, bevorzugt 0,01 bis 7 Gew.-% und besonders bevorzugt 0,05 bis 5 Gew.-% eines oder mehrerer Hilfsstoffe, wobei die Summe der Gewichtsmengen (α1) bis (α5) 100 Gew.-% beträgt,
**(ii)** radikalische Polymerisation unter Vernetzung, um ein wasserunlösliches, wässriges unbehandeltes Hydrogel-Polymer zu bilden,
**(iii)** Trocknen des Hydrogel-Polymers,
**(iv)** Mahlen und Absieben des Hydrogel -Polymers,
**(V)** Oberflächennachvernetzung des gemahlenen und gesiebten Hydrogel-Polymers und
**(vi)** Trocknung und Konfektionierung des wasserabsorbierenden Polymers,
wobei
der wässrigen Monomerlösung, vor der Zugabe des Initiators und dem Start der radikalischen Polymerisation, 0,07 bis 1 Gew.-% mindestens eines Tensides aus der Gruppe der nicht ionischen ungesättigten Polyether Copolymere, welches mindestens eine endständige Funktionalität enthält, nämlich eine (Methy)allyl Ether-Gruppe, und 0,07 bis 1 Gew.-% eines Blähmittels mit einer Partikelgröße von 10 µm bis 900µm zugesetzt werden, bezogen auf das wasserabsorbierende Polymer, wobei als Blähmittel ein Carbonat eingesetzt wird, welches ausgewählt ist aus der Gruppe bestehend aus Lithium-, Natrium-, Kalium , Rubidium-, Cäsiumcarbonat, Beryllium-, Calcium-, Magnesium-, Strontiumcarbonat oder Mischungen daraus,
und wobei das Tensid eine Verbindung der folgenden Formel ist: 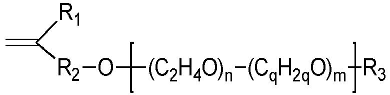 worin die Alkylenglykol-Einheiten (C₂H₄O) und (C_{q}H_{2q}O) statistisch oder als Gradient verteilt sind, R¹ -H oder -CH₃, R² eine Alkylengruppe aus der Gruppe von Methylen oder Ethylen, und R³ -H, lineare oder verzweigte C₁- bis C₇-Alkyle oder C₆- bis Cg-Alkyl-aryle bedeuten, q für eine Zahl von 3 bis 4 steht, n und m eine Zahl von 2 bis 12, bevorzugt 4 bis 8 bedeuten;
unter der Maßgabe, dass vom Gegenstand des Anspruchs 1 das folgende Verfahren ausgeschlossen ist:
In 963,843g einer wässrigen Lösung aus Natriumacrylat mit einem Neutralisationsgrad von 70 mol% (bezüglich Acrylsäure) sowie einer gesamt Monomerkonzentration von 40,29 % werden 0,697 g Polyethylenglycol300diacrylat (0,18% bezogen auf Acrylsäure; Estergehalt=83%) und 1,475 g Polyethylenglycol-(440)monoallyletheracrylat (0,36% bezogen auf Acrylsäure; Estergehalt entsprechend 78%) als Vernetzer gelöst. Dieser Lösung werden anschließend 9,6g einer 10%igen wässrigen Lösung des Tensids Allyl-10EO-b-10PO-Methyl zugegeben (wobei unter dem Begriff "EO" ein Ether verstanden wird, der durch Polyaddition von Ethylenoxid gebildet und als Polyether oder Polyethylenglykole bezeichnet wird, und wobei wird unter dem Begriff "PO" Propylenoxid gemäß der Formel -(CH2- CH(CH3)-O) m verstanden wird, wobei m für eine ganze Zahl von 2 bis 20 steht, und wobei b für Block steht); die Monomerenlösung wird in einem Kunststoff-Polymerisationsgefäß für 30 Minuten mit Stickstoff durchgespült, um den gelösten Sauerstoff zu entfernen. Bei einer Temperatur von 4 °C werden 2g fein calciniertes Soda zugesetzt und die Polymerisation durch die aufeinanderfolgende Zugabe von 0,3 g Natriumperoxodisulfat in 10 g destilliertem Wasser, 0,07 g 35 %ige Wasserstoffperoxidlösung in 10 g destilliertem Wasser und 0,015 g Ascorbinsäure in 2 g destilliertem Wasser gestartet. Nachdem die Endtemperatur (ca. 100 °C) erreicht ist, wird das Gel mit einem Fleischwolf zerkleinert und 2 h bei 150 °C in einem Umlufttrockenschrank getrocknet. Das getrocknete Vorprodukt wird grob zerstoßen, gemahlen und auf die vorbeschriebene Kornverteilung eingestellt. Die Oberflächennachvernetzung des erhaltenen Vorprodukts erfolgt durch die Beschichtung mit einer Lösung bestehend aus Ethylencarbonat/Wasser/Al-lactat/Alsulfat im Verhältnis 1/3/0,4/0,3% bez. auf 100g Vorprodukt und nachfolgender Erhitzung bei 170°C über einen Zeitraum von 90min. im Trockenschrank.

2. Verfahren zur Herstellung eines Hydrogel-Polymers, umfassend die Verfahrenschritte
(i) Mischen von
(α1) 0,1 bis 99,999 Gew.-%, bevorzugt 20 bis 98,99 Gew.-% und besonders bevorzugt 30 bis 98,95 Gew.-% polymerisierbaren, ethylenisch ungesättigten, säuregruppenhaltigen Monomeren oder deren Salze oder polymerisierbaren, ethylenisch ungesättigten, einen protonierten oder quarternierten Stickstoff beinhaltenden Monomeren, oder deren Mischungen, wobei mindestens ethylenisch ungesättigte, säuregruppenhaltige Monomere, vorzugsweise Acrylsäure, beinhaltende Mischungen besonders bevorzugt sind,
(α2) 0 bis 70 Gew.-%, bevorzugt 1 bis 60 Gew.-% und besonders bevorzugt 1 bis 40 Gew.-% polymerisierbaren, ethylenisch ungesättigten, mit (α1) copolymerisierbaren Monomeren,
(α3) 0,001 bis 10 Gew.-%, bevorzugt 0,01 bis 7 Gew.-% und besonders bevorzugt 0,05 bis 5 Gew.-% eines oder mehrerer Vernetzer,
(α4) 0 bis 30 Gew.-%, bevorzugt 1 bis 20 Gew.-% und besonders bevorzugt 5 bis 10 Gew.-% wasserlöslichen Polymeren,
(α5) 0 bis 20 Gew.-%, bevorzugt 0,01 bis 7 Gew.-% und besonders bevorzugt 0,05 bis 5 Gew.-% eines oder mehrerer Hilfsstoffe, wobei die Summe der Gewichtsmengen (α1) bis (α5) 100 Gew.-%,
**(ii)** radikalische Polymerisation unter Vernetzung, um ein wasserunlösliches, wässriges unbehandeltes Hydrogel-Polymer zu bilden,
(iii) Trocknen des Hydrogel-Polymers,
(iv) Mahlen und Absieben des Hydrogel-Polymers,
wobei
der wässrigen Monomerlösung, vor der Zugabe des Initiators und dem Start der radikalischen Polymerisation, 0,07 bis 1 Gew.-% mindestens eines Tensides aus der Gruppe der nicht ionischen ungesättigten Polyether Copolymere, welches mindestens eine endständige Funktionalität enthält, nämlich eine (Methy)allyl Ether-Gruppe, und 0,07 bis 1 Gew.-% eines Blähmittels mit einer Partikelgröße von 10 µm bis 900µm zugesetzt werden, bezogen auf das Hydrogel- Polymere wobei als Blähmittel ein Carbonat eingesetzt wird, welches ausgewählt ist aus der Gruppe bestehend aus Lithium-, Natrium-, Kalium , Rubidium-, Cäsiumcarbonat, Beryllium-, Calcium-, Magnesium-, Strontiumcarbonat oder Mischungen daraus,
und wobei das Tensid eine Verbindung der folgenden Formel ist: 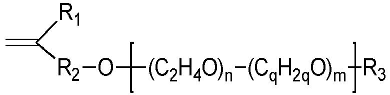 worin die Alkylenglykol-Einheiten (C₂H₄O) und (C_{q}H_{2q}O) statistisch oder als Gradient verteilt sind, R¹ -H oder -CH₃, R² eine Alkylengruppe aus der Gruppe von Methylen oder Ethylen, und R³ -H, lineare oder verzweigte C₁- bis C₇-Alkyle oder C₆- bis Cg-Alkyl-aryle bedeuten, q für eine Zahl von 3 bis 4 steht, n und m eine Zahl von 2 bis 12, bevorzugt 4 bis 8 bedeuten;
unter der Maßgabe, dass vom Gegenstand des Anspruchs 2 das folgende Verfahren ausgeschlossen ist:
In 963,843g einer wässrigen Lösung aus Natriumacrylat mit einem Neutralisationsgrad von 70 mol% (bezüglich Acrylsäure) sowie einer gesamt Monomerkonzentration von 40,29 % werden 0,697 g Polyethylenglycol300diacrylat (0,18% bezogen auf Acrylsäure; Estergehalt=83%) und 1,475 g Polyethylenglycol-(440)monoallyletheracrylat (0,36% bezogen auf Acrylsäure; Estergehalt entsprechend 78%) als Vernetzer gelöst. Dieser Lösung werden anschließend 9,6g einer 10%igen wässrigen Lösung des Tensids Allyl-10EO-b-10PO-Methyl zugegeben (wobei unter dem Begriff "EO" ein Ether verstanden wird, der durch Polyaddition von Ethylenoxid gebildet und als Polyether oder Polyethylenglykole bezeichnet wird, und wobei wird unter dem Begriff "PO" Propylenoxid gemäß der Formel -(CH2- CH(CH3)-O) m verstanden wird, wobei m für eine ganze Zahl von 2 bis 20 steht, und wobei b für Block steht); die Monomerenlösung wird in einem Kunststoff-Polymerisationsgefäß für 30 Minuten mit Stickstoff durchgespült, um den gelösten Sauerstoff zu entfernen. Bei einer Temperatur von 4 °C werden 2g fein calciniertes Soda zugesetzt und die Polymerisation durch die aufeinanderfolgende Zugabe von 0,3 g Natriumperoxodisulfat in 10 g destilliertem Wasser, 0,07 g 35 %ige Wasserstoffperoxidlösung in 10 g destilliertem Wasser und 0,015 g Ascorbinsäure in 2 g destilliertem Wasser gestartet. Nachdem die Endtemperatur (ca. 100 °C) erreicht ist, wird das Gel mit einem Fleischwolf zerkleinert und 2 h bei 150 °C in einem Umlufttrockenschrank getrocknet. Das getrocknete Hydrogel-Polymer wird grob zerstoßen, gemahlen und auf die vorbeschriebene Kornverteilung eingestellt.

3. Verfahren nach einem der vorhergehenden Ansprüche, **dadurch gekennzeichnet, dass** das Tensid und das Blähmittel gemeinsam der Monomerlösung zugesetzt werden.

4. Verfahren nach einem der vorhergehenden Ansprüche, **dadurch gekennzeichnet, dass** die Blähmittel aus Sodapartikeln bestehen.

5. Verfahren nach einem der vorhergehenden Ansprüche, **dadurch gekennzeichnet, dass** das Blähmittel eine Partikelgröße von 50 µm bis 500 µm und bevorzugt 100 µm bis 450 µm hat.

6. Verfahren nach einem der vorhergehenden Ansprüche, **dadurch gekennzeichnet, dass** mehr als 35 Gew.-% der Blähmittel eine Teilchengröße von 100-300µm aufweisen.

7. Wasserabsorbierendes Polymer erhältlich nach einem der Ansprüche 1 bis 6.

## Claims

1. Process for producing a water-absorbing polymer composition, comprising the process steps of
(i) mixing
(α1) 0.1 to 99.999% by weight, preferably 20 to 98.99% by weight and more preferably 30 to 98.95% by weight of polymerizable, ethylenically unsaturated monomers containing acid groups, or salts thereof, or polymerizable, ethylenically unsaturated monomers including a protonated or quaternized nitrogen, or mixtures thereof, particular preference being given to mixtures including at least ethylenically unsaturated monomers containing acid groups, preferably acrylic acid,
(α2) 0 to 70% by weight, preferably 1 to 60% by weight and more preferably 1 to 40% by weight of polymerizable, ethylenically unsaturated monomers copolymerizable with (α1),
(α3) 0.001 to 10% by weight, preferably 0.01 to 7% by weight and more preferably 0.05 to 5% by weight of one or more crosslinkers,
(α4) 0 to 30% by weight, preferably 1 to 20% by weight and more preferably 5 to 10% by weight of water-soluble polymers, and
(α5) 0 to 20% by weight, preferably 0.01 to 7% by weight and more preferably 0.05 to 5% by weight of one or more assistants, where the sum of the weights of (α1) to (α5) is 100% by weight,
(ii) free-radical polymerization with crosslinking to form a water-insoluble, aqueous untreated hydrogel polymer,
(iii) drying the hydrogel polymer,
(iv) grinding and sieving the hydrogel polymer to size,
(v) surface postcrosslinking the ground and sieved hydrogel polymer
and
(vi) drying and finishing the water-absorbing polymer,
wherein
the aqueous monomer solution, prior to the addition of the initiator and the commencement of free-radical polymerization, is admixed with 0.07 to 1% by weight of at least one surfactant from the group of the nonionic unsaturated polyether copolymers containing at least one terminal functionality, namely a (meth)allyl ether group, and 0.07 to 1% by weight of a blowing agent having a particle size of 10 µm to 900 µm, based on the water-absorbing polymer, where the blowing agent used is a carbonate selected from the group consisting of lithium carbonate, sodium carbonate, potassium carbonate, rubidium carbonate, caesium carbonate, beryllium carbonate, calcium carbonate, magnesium carbonate, strontium carbonate or mixtures thereof,
and wherein the surfactant is a compound of the following formula: 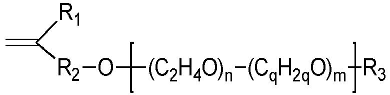 in which the alkylene glycol units (C₂H₄O) and (C_{q}H_{2q}O) are arranged randomly or as a gradient, R₁ is -H or -CH₃, R₂ is an alkylene group from the group of methylene and ethylene, and R₃ is -H, linear or branched C₁- to C₇-alkyls or C₆- to C₉-alkylaryls, q is a number from 3 to 4, n and m are each a number from 2 to 12, preferably 4 to 8;
with the proviso that the subject-matter of Claim 1 excludes the following process:
0.697 g of polyethylene glycol-300 diacrylate (0.18% based on acrylic acid/ester content = 83%) and 1.475 g of polyethylene glycol-440 monoallyl ether acrylate (0.36% based on acrylic acid/ester content, corresponding to 78%) as crosslinker are dissolved in 963.843 g of an aqueous solution of sodium acrylate with a neutralization level of 70 mol% (based on acrylic acid) and a total monomer concentration of 40.29%. Subsequently, 9.6 g of a 10% aqueous solution of the surfactant allyl-10EO-b-10PO-methyl (where the term "EO" is understood to mean an ether which is formed by polyaddition of ethylene oxide and is referred to as polyether or polyethylene glycols, and where the term "PO" is understood to mean propylene oxide of the formula - (CH₂-CH(CH₃)-O)ₘ where m is an integer 2 to 20, and where b means block) are added to this solution; the monomer solution is purged with nitrogen in a plastic polymerization vessel for 30 minutes in order to remove the dissolved oxygen. At a temperature of 4°C, 2 g of finely calcined sodium carbonate are added and the polymerization is initiated by the successive addition of 0.3 g of sodium peroxodisulphate in 10 g of dist. water, 0.07 g of 35% hydrogen peroxide solution in 10 g of dist. water and 0.015 g of ascorbic acid in 2 g of dist. water. Once the end temperature (approx. 100°C) has been attained, the gel is comminuted with a meat grinder and dried at 150°C in a forced-air drying cabinet for 2 h. The dried precursor is coarsely crushed, ground and adjusted to the above-described particle distribution. The surface postcrosslinking of the precursor thus obtained is effected by coating with a solution consisting of ethylene carbonate/water/aluminium lactate/aluminium sulphate in a ratio of 1/3/0.4/0.3% based on 100 g of precursor and subsequent heating at 170°C over a period of 90 min in a drying cabinet.

2. Process for producing a hydrogel polymer, comprising the process steps of
(i) mixing
(α1) 0.1 to 99.999% by weight, preferably 20 to 98.99% by weight and more preferably 30 to 98.95% by weight of polymerizable, ethylenically unsaturated monomers containing acid groups, or salts thereof, or polymerizable, ethylenically unsaturated monomers including a protonated or quaternized nitrogen, or mixtures thereof, particular preference being given to mixtures including at least ethylenically unsaturated monomers containing acid groups, preferably acrylic acid,
(α2) 0 to 70% by weight, preferably 1 to 60% by weight and more preferably 1 to 40% by weight of polymerizable, ethylenically unsaturated monomers copolymerizable with (α1),
(α3) 0.001 to 10% by weight, preferably 0.01 to 7% by weight and more preferably 0.05 to 5% by weight of one or more crosslinkers,
(α4) 0 to 30% by weight, preferably 1 to 20% by weight and more preferably 5 to 10% by weight of water-soluble polymers,
(α5) 0 to 20% by weight, preferably 0.01 to 7% by weight and more preferably 0.05 to 5% by weight of one or more assistants, where the sum of the weights of (α1) to (α5) is 100% by weight,
(ii) free-radical polymerization with crosslinking to form a water-insoluble, aqueous untreated hydrogel polymer,
(iii) drying the hydrogel polymer,
(iv) grinding and sieving the hydrogel polymer to size,
wherein
the aqueous monomer solution, prior to the addition of the initiator and the commencement of free-radical polymerization, is admixed with 0.07 to 1% by weight of at least one surfactant from the group of the nonionic, unsaturated polyether copolymers containing at least one terminal functionality, namely a (meth)allyl ether group, and 0.07 to 1% by weight of a blowing agent having a particle size of 10 µm to 900 µm, based on the hydrogel polymer, where the blowing agent used is a carbonate selected from the group consisting of lithium carbonate, sodium carbonate, potassium carbonate, rubidium carbonate, caesium carbonate, beryllium carbonate, calcium carbonate, magnesium carbonate, strontium carbonate or mixtures thereof,
and wherein the surfactant is a compound of the following formula: 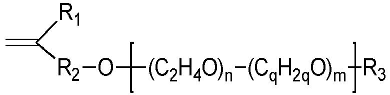 in which the alkylene glycol units (C₂H₄O) and (C_{q}H_{2q}O) are arranged randomly or as a gradient, R₁ is -H or -CH₃, R₂ is an alkylene group from the group of methylene and ethylene, and R₃ is -H, linear or branched C₁- to C₇-alkyls or C₆- to C₉-alkylaryls, q is a number from 3 to 4, n and m are each a number from 2 to 12, preferably 4 to 8; with the proviso that the subject-matter of Claim 2 excludes the following process:
0.697 g of polyethylene glycol-300 diacrylate (0.18% based on acrylic acid/ester content = 83%) and 1.475 g of polyethylene glycol-440 monoallyl ether acrylate (0.36% based on acrylic acid/ester content, corresponding to 78%) as crosslinker are dissolved in 963.843 g of an aqueous solution of sodium acrylate with a neutralization level of 70 mol% (based on acrylic acid) and a total monomer concentration of 40.29%. Subsequently, 9.6 g of a 10% aqueous solution of the surfactant allyl-10EO-b-10PO-methyl (where the term "EO" is understood to mean an ether which is formed by polyaddition of ethylene oxide and is referred to as polyether or polyethylene glycols, and where the term "PO" is understood to mean propylene oxide of the formula - (CH₂-CH(CH₃)-O)ₘ where m is an integer 2 to 20, and where b means block) are added to this solution; the monomer solution is purged with nitrogen in a plastic polymerization vessel for 30 minutes in order to remove the dissolved oxygen. At a temperature of 4°C, 2 g of finely calcined sodium carbonate are added and the polymerization is initiated by the successive addition of 0.3 g of sodium peroxodisulphate in 10 g of dist. water, 0.07 g of 35% hydrogen peroxide solution in 10 g of dist. water and 0.015 g of ascorbic acid in 2 g of dist. water. Once the end temperature (approx. 100°C) has been attained, the gel is comminuted with a meat grinder and dried at 150°C in a forced-air drying cabinet for 2 h. The dried hydrogel polymer is coarsely crushed, ground and adjusted to the above-described particle distribution.

3. Process according to any of the preceding claims, **characterized in that** the surfactant and the blowing agent are added together to the monomer solution.

4. Process according to any of the preceding claims, **characterized in that** the blowing agents consist of sodium carbonate particles.

5. Process according to any of the preceding claims, **characterized in that** the blowing agent has a particle size of 50 µm to 500 µm and more preferably 100 µm to 450 µm.

6. Process according to any of the preceding claims, **characterized in that** more than 35% by weight of the blowing agents have a particle size of 100-300 µm.

7. Water-absorbing polymer obtainable according to any of Claims 1 to 6.

## Revendications

1. Procédé pour la préparation d'une composition de polymère absorbant l'eau, comprenant les étapes de procédé de
(i) mélange de
(α1) 0,1 à 99,999 % en poids, de préférence 20 à 98,99 % en poids et de manière particulièrement préférée 30 à 98,95 % en poids de monomères polymérisables, éthyléniquement insaturés, contenant des groupes acides ou leurs sels ou de monomères polymérisables, éthyléniquement insaturés, contenant un azote protoné ou quaternisé ou leurs mélanges, en préférant en particulier des mélanges contenant au moins des monomères éthyléniquement insaturés, contenant des groupes acides, de préférence l'acide acrylique,
(α2) 0 à 70 % en poids, de préférence 1 à 60 % en poids et de manière particulièrement préférée 1 à 40 % en poids de monomères polymérisables, éthyléniquement insaturés, copolymérisables avec (α1),
(α3) 0,001 à 10 % en poids, de préférence 0,01 à 7% en poids et de manière particulièrement préférée 0,05 à 5 % en poids d'un ou de plusieurs agents de réticulation,
(α4) 0 à 30 % en poids, de préférence 1 à 20 % en poids et de manière particulièrement préférée 5 à 10 % en poids de polymères solubles dans l'eau, ainsi que
(α5) 0 à 20 % en poids, de préférence 0,01 à 7 % en poids et de manière particulièrement préférée 0,05 à 5 % en poids d'un ou de plusieurs adjuvants,
la somme des quantités pondérales (α1) à (α5) étant égale à 100 % en poids,
(ii) polymérisation par voie radicalaire avec réticulation, pour former un polymère sous forme d'un hydrogel aqueux, non traité, insoluble dans l'eau,
(iii) séchage du polymère sous forme d'hydrogel,
(iv) broyage et tamisage du polymère sous forme d'hydrogel,
(v) post-réticulation en surface du polymère sous forme d'hydrogel broyé et tamisé et
(vi) séchage et confection du polymère absorbant l'eau,
à la solution aqueuse de monomères étant additionnés, avant l'addition de l'initiateur et le démarrage de la polymérisation par voie radicalaire, 0,07 à 1 % en poids d'au moins un agent tensioactif du groupe des copolymères de polyéthers non ioniques insaturés, qui contient au moins une fonctionnalité en position terminale, à savoir un groupe (méthyl)allyléther, et 0,07 à 1 % en poids d'un agent de gonflement doté d'une grosseur de particule de 10 µm à 900 µm, par rapport au polymère absorbant l'eau, un carbonate étant utilisé en tant qu'agent de gonflement, lequel est choisi dans le groupe constitué par le carbonate de lithium, le carbonate de sodium, le carbonate de potassium, le carbonate de rubidium, le carbonate de césium, le carbonate de béryllium, le carbonate de calcium, le carbonate de magnésium, le carbonate de strontium ou des mélanges de ceux-ci.
et le tensioactif étant un composé de formule suivante : 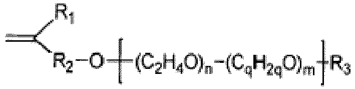 dans laquelle les unités alkylèneglycol (C₂H₄O) et (C_{q}H_{2q}O) sont réparties de manière statistique ou comme gradient, R¹ signifie -H ou -CH₃, R² signifie un groupe alkylène parmi le groupe méthylène et éthylène, et R³ signifie -H, des C₁₋₇-alkyle linéaires ou ramifiés ou des C₆₋₉-alkylaryle, q représente un nombre de 3 à 4, n et m signifient un nombre de 2 à 12, préférablement de 4 à 8 ;
étant entendu que le procédé suivant est exclu de l'objet de la revendication 1 :
0,697 g de diacrylate de polyéthylèneglycol-300 (0,18 % par rapport à l'acide acrylique ; contenu en ester = 83 %) et 1,475 g d'acrylate de monoallyléther de polyéthylèneglycol-(440) (0,36 % par rapport à l'acide acrylique ; contenu en ester correspondant à 78 %) en tant qu'agents de réticulation sont dissous dans 963,843 g d'une solution aqueuse d'acrylate de sodium présentant un degré de neutralisation de 70 % en moles (par rapport à l'acide acrylique) ainsi qu'une concentration totale en monomères de 40,29 %. À cette solution sont ensuite additionnés 9,6 g d'une solution aqueuse à 10 % du tensioactif allyl-10EO-b-10PO-méthyle (où on entend par le terme « EO » un éther qui est formé par la polyaddition d'oxyde d'éthylène et qui est désigné comme polyéther ou polyéthylèneglycol, et par le terme « PO » on entend l'oxyde de propylène correspondant à la formule -(CH₂-CH(CH₃)-O)ₘ, m représentant un nombre entier de 2 à 20, et b représentant bloc) ; la solution de monomères est purgée avec de l'azote pendant 30 minutes dans un récipient de polymérisation de plastique, afin d'éliminer l'oxygène dissous. À une température de 4 °C, 2 g de soude calcinée finement sont additionnés et la polymérisation est démarrée par addition successive de 0,3 g de peroxodisulfate de sodium dans 10 g d'eau distillée, 0,07 g d'une solution de peroxyde d'hydrogène à 35 % dans 10 g d'eau distillée et 0,015 g d'acide ascorbique dans 2 g d'eau distillée. Après avoir atteint la température finale (environ 100 °C), le gel est broyé avec un hachoir à viande et séché pendant 2 h à 150 °C dans un four à circulation d'air. Le pré-produit séché est concassé grossièrement, broyé et ajusté à la granulométrie prédéterminée. La post-réticulation de surface du pré-produit obtenu est effectuée par le revêtement par une solution constituée de carbonate d'éthylène/eau/lactate d'Al/sulfate d'Al en un rapport 1/3/0,4/0,3 % par rapport à 100 g de pré-produit et par chauffage ultérieur à 170 °C pendant un temps de 90 min dans une étuve.

2. Procédé pour la préparation d'un polymère sous forme hydrogel, comprenant les étapes de procédé de
(i) mélange de
(α1) 0,1 à 99,999 % en poids, de préférence 20 à 98,99 % en poids et de manière particulièrement préférée 30 à 98,95 % en poids de monomères polymérisables, éthyléniquement insaturés, contenant des groupes acides ou leurs sels ou de monomères polymérisables, éthyléniquement insaturés, contenant un azote protoné ou quaternisé ou leurs mélanges, en préférant en particulier des mélanges contenant au moins des monomères éthyléniquement insaturés, contenant des groupes acides, de préférence l'acide acrylique,
(α2) 0 à 70 % en poids, de préférence 1 à 60 % en poids et de manière particulièrement préférée 1 à 40 % en poids de monomères polymérisables, éthyléniquement insaturés, copolymérisables avec (α1),
(α3) 0,001 à 10 % en poids, de préférence 0,01 à 7 % en poids et de manière particulièrement préférée 0,05 à 5 % en poids d'un ou de plusieurs agents de réticulation,
(α4) 0 à 30 % en poids, de préférence 1 à 20 % en poids et de manière particulièrement préférée 5 à 10 % en poids de polymères solubles dans l'eau,
(α5) 0 à 20 % en poids, de préférence 0,01 à 7 % en poids et de manière particulièrement préférée 0,05 à 5 % en poids d'un ou de plusieurs adjuvants,
la somme des quantités pondérales (α1) à (α5) étant égale à 100 % en poids,
(ii) polymérisation par voie radicalaire avec réticulation, pour former un polymère sous forme d'un hydrogel aqueux, non traité, insoluble dans l'eau,
(iii) séchage du polymère sous forme d'hydrogel,
(iv) broyage et tamisage du polymère sous forme d'hydrogel
à la solution aqueuse de monomères étant additionnés, avant l'addition de l'initiateur et le démarrage de la polymérisation par voie radicalaire, 0,07 à 1 % en poids d'au moins un agent tensioactif du groupe des copolymères de polyéthers non ioniques insaturés, qui contient au moins une fonctionnalité en position terminale, à savoir un groupe (méthyl)allyléther, et 0,07 à 1 % en poids d'un agent de gonflement doté d'une grosseur de particule de 10 µm à 900 µm, par rapport au polymère sous forme d'hydrogel, un carbonate étant utilisé en tant qu'agent de gonflement, lequel est choisi dans le groupe constitué par le carbonate de lithium, le carbonate de sodium, le carbonate de potassium, le carbonate de rubidium, le carbonate de césium, le carbonate de béryllium, le carbonate de calcium, le carbonate de magnésium, le carbonate de strontium ou des mélanges de ceux-ci,
et le tensioactif étant un composé de formule suivante : 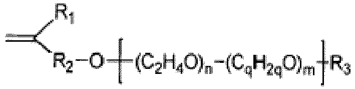 dans laquelle les unités alkylèneglycol (C₂H₄O) et (C_{q}H_{2q}O) sont réparties de manière statistique ou comme gradient, R¹ signifie -H ou -CH₃, R² signifie un groupe alkylène parmi le groupe méthylène et éthylène, et R³ signifie -H, des C₁₋₇-alkyle linéaires ou ramifiés ou des C₆₋₉-alkylaryle, q représente un nombre de 3 à 4, n et m signifient un nombre de 2 à 12, préférablement de 4 à 8 ;
étant entendu que le procédé suivant est exclu de l'objet de la revendication 1 :
0,697 g de diacrylate de polyéthylèneglycol-300 (0,18 % par rapport à l'acide acrylique ; contenu en ester = 83 %) et 1,475 g d'acrylate de monoallyléther de polyéthylèneglycol-(440) (0,36 % par rapport à l'acide acrylique ; contenu en ester correspondant à 78 %) en tant qu'agents de réticulation sont dissous dans 963,843 g d'une solution aqueuse d'acrylate de sodium présentant un degré de neutralisation de 70 % en moles (par rapport à l'acide acrylique) ainsi qu'une concentration totale en monomères de 40,29 %. À cette solution sont ensuite additionnés 9,6 g d'une solution aqueuse à 10 % du tensioactif allyl-10EO-b-10PO-méthyle (où on entend par le terme « EO » un éther qui est formé par la polyaddition d'oxyde d'éthylène et qui est désigné comme polyéther ou polyéthylèneglycol, et par le terme « PO » on entend l'oxyde de propylène correspondant à la formule -(CH₂-CH(CH₃)-O)ₘ, m représentant un nombre entier de 2 à 20, et b représentant bloc) ; la solution de monomères est purgée avec de l'azote pendant 30 minutes dans un récipient de polymérisation de plastique, afin d'éliminer l'oxygène dissous. À une température de 4 °C, 2 g de soude calcinée finement sont additionnés et la polymérisation est démarrée par addition successive de 0,3 g de peroxodisulfate de sodium dans 10 g d'eau distillée, 0,07 g d'une solution de peroxyde d'hydrogène à 35 % dans 10 g d'eau distillée et 0,015 g d'acide ascorbique dans 2 g d'eau distillée. Après avoir atteint la température finale (environ 100 °C), le gel est broyé avec un hachoir à viande et séché pendant 2 h à 150 °C dans un four à circulation d'air. Le polymère sous forme d'hydrogel séché est concassé grossièrement, broyé et ajusté à la granulométrie prédéterminée.

3. Procédé selon l'une quelconque des revendications précédentes, **caractérisé en ce que** l'agent tensioactif et l'agent de gonflement sont ajoutés ensemble à la solution de monomères.

4. Procédé selon l'une quelconque des revendications précédentes, **caractérisé en ce que** les agents de gonflement sont constitués par des particules de soude.

5. Procédé selon l'une quelconque des revendications précédentes, **caractérisé en ce que** l'agent de gonflement présente une grosseur de particule de 50 µm à 500 µm et de manière préférée de 100 µm à 450 µm.

6. Procédé selon l'une quelconque des revendications précédentes, **caractérisé en ce que** plus de 35 % en poids des agents de gonflement présentent une grosseur de particule de 100-300 µm.

7. Polymère absorbant l'eau, pouvant être obtenu selon l'une quelconque des revendications 1 à 6.
